(19) Europäisches Patentamt
European Patent Office
Office européen des brevets

(11) **EP 3 763 546 B1**

(12) **EUROPEAN PATENT SPECIFICATION**

(45) Date of publication and mention of the grant of the patent:
**26.04.2023 Bulletin 2023/17**

(21) Application number: **20182986.8**

(22) Date of filing: **29.06.2020**

(51) International Patent Classification (IPC):
***B60C 1/00*** *(2006.01)* ***B60C 11/03*** *(2006.01)*
***B60C 11/12*** *(2006.01)* ***C08L 15/00*** *(2006.01)*
***C08C 19/25*** *(2006.01)* ***C08C 19/44*** *(2006.01)*

(52) Cooperative Patent Classification (CPC):
(C-Sets available)
**B60C 11/0304; B60C 1/0016; B60C 11/0306; B60C 11/12; B60C 11/1236; B60C 11/1281; C08C 19/25; C08C 19/44; C08L 15/00;**
B60C 2011/0355 (Cont.)

# (54) PNEUMATIC TIRE

LUFTREIFEN

PNEUMATIQUE GONFLABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2019 JP 2019130263**

(43) Date of publication of application:
**13.01.2021 Bulletin 2021/02**

(73) Proprietor: **Sumitomo Rubber Industries, Ltd.**
**Kobe-shi, Hyogo-ken 651-0072 (JP)**

(72) Inventor: **NAKATANI, Masako**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 899 041**
**EP-A1- 3 254 872**
**WO-A1-2019/039614**
**JP-A- 2018 027 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 15/00, C08L 9/00, C08L 25/16;**
**C08L 15/00, C08L 9/00, C08L 45/02**

## Description

BACKGROUND OF THE INVENTION

Field of the Invention

The present invention relates to a pneumatic tire.

Description of the Background Art

A pneumatic tire for passenger cars which has a narrow width (narrow tire cross-sectional width) and a large diameter (large tire outer diameter) and in which the internal pressure, the cross-sectional width (SW), and the outer diameter (OD) of the tire satisfy a specific relationship, has been proposed as a tire having reduced rolling resistance to realize low fuel consumption performance.

Methods for enhancing low fuel consumption performance through change in a blending formula such as reduction in the amount of a filler in a rubber composition, have also been proposed. However, if the amount of a filler is reduced for achieving low fuel consumption, wet grip performance generally tends to deteriorate. Thus, it is difficult to achieve both of these performances. Therefore, the low fuel consumption performance, the wet grip performance, and the steering stability of pneumatic tires such as a tire having a narrow width and a large diameter have been desired to be enhanced in a balanced manner.

A tire according to the preamble of claim 1 is disclosed in EP 3 254 872 A1.

SUMMARY OF THE INVENTION

The present invention has been made to solve the above-described problem, and an object of the present invention is to provide a pneumatic tire having excellent combined performance of low fuel consumption performance, wet grip performance, and steering stability.

The present invention is directed to a pneumatic tire including a tread portion which has three or more main grooves continuously extending in a tire circumferential direction and has a land portion divided by the main grooves, wherein

the main grooves include a pair of shoulder main grooves continuously extending in the tire circumferential direction at locations on both outer sides in a tire axial direction relative to a tire equator, and a center main groove continuously extending in the tire circumferential direction between the pair of shoulder main grooves,
a shoulder sipe extending in the tire axial direction is formed in at least one of shoulder land portions that are disposed at outermost sides in the tire axial direction of the land portion,
a tread width Wt and a depth D of each main groove satisfy the following expression (I),
the tread width Wt and a length Ls of the shoulder sipe formed in at least one of the shoulder land portions, satisfy the following expression (II), and,
in a shoulder land portion rubber composition forming the shoulder land portions, not less than 4 parts by mass of a low-temperature plasticizer having a solidifying temperature not higher than -10°C, and not less than 3 parts by mass of a resin having a softening point of 60 to 120°C, are contained per 100 parts by mass of a rubber component.
[Math. 1]

$$5 \leq \frac{Wt}{2D} \leq 35 \qquad (I)$$

$$10 \leq \frac{Ls}{Wt} \times 100 \leq 30 \qquad (II)$$

A kinematic viscosity of the low-temperature plasticizer at 40°C, measured under a condition of 40°C according to JIS K2283-2000, is preferably not greater than 60 $mm^2/s$.

According to the present invention, the pneumatic tire includes a tread portion which has three or more main grooves continuously extending in a tire circumferential direction and has a land portion divided by the main grooves. The main grooves include a pair of shoulder main grooves continuously extending in the tire circumferential direction at locations on both outer sides in a tire axial direction relative to a tire equator, and a center main groove continuously

extending in the tire circumferential direction between the pair of shoulder main grooves. A shoulder sipe extending in the tire axial direction is formed in at least one of shoulder land portions that are disposed at outermost sides in the tire axial direction of the land portion. A tread width Wt and a depth D of each main groove satisfy a predetermined relational expression, and the tread width Wt and a length Ls of the shoulder sipe satisfy a predetermined relational expression. A rubber composition containing, in predetermined blending amounts, a low-temperature plasticizer having a specific solidifying temperature and a resin having a specific softening point, is used as a shoulder land portion rubber composition forming the shoulder land portions. Accordingly, it is possible to provide a pneumatic tire having excellent combined performance of low fuel consumption performance, wet grip performance, and steering stability.

BRIEF DESCRIPTION OF THE DRAWINGS

FIG. 1 is a development of a tread portion of a pneumatic tire according to an embodiment of the present invention;
FIG. 2 is a cross-sectional view of the tread portion in FIG. 1, taken along the line A-A;
FIG. 3 is an enlarged view of an outer middle land portion in FIG. 1;
FIG. 4(a) is a cross-sectional view of a first tilted portion in FIG. 3, taken along the line B-B;
FIG. 4(b) is a cross-sectional view of a second tilted portion in FIG. 3, taken along the line C-C;
FIG. 5 is an enlarged view of an inner middle land portion in FIG. 1;
FIG. 6 is an enlarged view of an outer shoulder land portion in FIG. 1; and
FIG. 7 is an enlarged view of an inner shoulder land portion in FIG. 1.

DESCRIPTION OF THE PREFERRED EMBODIMENTS

The present invention is a pneumatic tire including a tread portion which has three or more main grooves continuously extending in a tire circumferential direction and has a land portion divided by the main grooves. The main grooves include a pair of shoulder main grooves continuously extending in the tire circumferential direction at locations on both outer sides in a tire axial direction relative to a tire equator, and a center main groove continuously extending in the tire circumferential direction between the pair of shoulder main grooves. A shoulder sipe extending in the tire axial direction is formed in at least one of shoulder land portions that are disposed at outermost sides in the tire axial direction of the land portion. A tread width Wt and a depth D of each main groove satisfy the aforementioned expression (I), and the tread width Wt and a length Ls of the shoulder sipe formed in at least one of the shoulder land portions satisfy the aforementioned expression (II). A rubber composition containing, in predetermined blending amounts, a low-temperature plasticizer having a specific solidifying temperature and a resin having a specific softening point, is used as a shoulder land portion rubber composition forming the shoulder land portions. Therefore, it is possible to provide a pneumatic tire having excellent combined performance of low fuel consumption performance, wet grip performance, and steering stability.

The reason why such an advantageous effect is obtained is not clear, but is inferred as follows.

If the amount of a filler is reduced for achieving low fuel consumption, wet grip performance ordinarily deteriorates. However, since the shoulder land portion rubber composition in which the predetermined low-temperature plasticizer and resin are blended in a balanced manner is used, the wet grip performance can be improved without causing low fuel consumption performance to deteriorate. Here, if the low-temperature plasticizer is blended, thermal degradation resistance tends to decrease. However, since the pattern that satisfies the aforementioned expressions (I) and (II) and the like is employed, block stiffness is improved, whereby rubber deformation can be suppressed, and heat accumulation can also be suppressed. The reason is inferred as follows. If the resin is added for improving the wet grip performance, the glass transition temperature (Tg) increases so that the low fuel consumption performance tends to deteriorate although wet grip performance is improved. However, since the low-temperature plasticizer is further added, it is possible to, while improving the wet grip performance, suppress increase in Tg to suppress deterioration of the low fuel consumption performance. In addition, since the low-temperature plasticizer has a low molecular weight, the thermal degradation resistance tends to decrease. However, it is inferred that the pattern allows improvement in the block stiffness, whereby rubber deformation is suppressed, and heat accumulation is less likely to occur. It is inferred that these features allow enhancement of the combined performance of the low fuel consumption performance, the wet grip performance, and the steering stability.

Hereinafter, an embodiment of the present invention will be described with reference to the drawings.

FIG. 1 is a development of a tread portion 2 of a pneumatic tire (hereinafter, sometimes referred to simply as "tire") 1 according to the present embodiment. FIG. 2 is a cross-sectional view of the tread portion 2 in FIG. 1, taken along the line A-A. The pneumatic tire 1 according to the present embodiment is suitably used for, for example, passenger cars.

The tread portion 2 in the present embodiment is provided with a tread pattern having a designated mounting direction to a vehicle, for example. The mounting direction to the vehicle is indicated with, for example, characters or marks on sidewall portions (not shown) or the like. In FIG. 1, the left side corresponds to the outer side of the vehicle, and the right side corresponds to the inner side of the vehicle.

Since the mounting direction to the vehicle is designated, the tread portion 2 has an outer tread edge Te1 to be located on the outer side of the vehicle when being mounted to the vehicle, and an inner tread edge Te2 to be located on the inner side of the vehicle when being mounted to the vehicle.

Each of the tread edges Te1 and Te2 is a ground contact position on an outermost side in the tire axial direction when: a normal load is applied to the tire 1 in a normal state where the tire 1 is mounted to a normal rim (not shown) and inflated to a normal internal pressure, and no load is applied to the tire 1; and the tire 1 is brought into contact with a flat surface at a camber angle of 0°.

The "normal rim" refers to a rim that is defined, in a standard system including a standard on which the tire is based, by the standard for each tire. The "normal rim" is, for example, the "standard rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire. The "normal internal pressure" is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" refers to a load that is defined, in a standard system including a standard on which the tire is based, by the standard for each tire. The "normal load" is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tread portion 2 of the tire 1 has three or more main grooves 3 continuously extending in a tire circumferential direction and a land portion 4 divided by the main grooves 3.

Each main groove 3 linearly extends in the tire circumferential direction, for example. Each main groove 3 may extend in a zigzag or wavy manner, for example.

The main grooves 3 include, for example, shoulder main grooves 5 provided on the outer tread edge Te1 side and the inner tread edge Te2 side and a center main groove 6 provided closer to a tire equator C than the shoulder main grooves 5 are.

The shoulder main grooves 5 include, for example, an outer shoulder main groove 5A provided on the outer tread edge Te1 side and an inner shoulder main groove 5B provided on the inner tread edge Te2 side.

The center main groove 6 is provided between the outer shoulder main groove 5A and the inner shoulder main groove 5B, for example. In the present embodiment, one center main groove 6 is provided on the tire equator C, for example. One center main groove 6 may be provided on, for example, each of the outer tread edge Te1 side and the inner tread edge Te2 side relative to the tire equator C.

The width W1 of each of the shoulder main grooves 5A and 5B and the width W2 of the center main groove 6 in the present embodiment are, for example, each preferably 3.5 to 10.0% of a tread ground-contact width TW. The tread ground-contact width TW is the distance in the tire axial direction between the outer tread edge Te1 and the inner tread edge Te2 of the tire 1 in the normal state.

The inner shoulder main groove 5B in the present embodiment has, for example, a larger width than the outer shoulder main groove 5A. Accordingly, wet performance and steering stability on a dry road surface are improved in a balanced manner.

The center main groove 6 in the present embodiment has, for example, a larger width than the inner shoulder main groove 5B. Accordingly, water near the tire equator C is easily discharged during running on a wet road surface, whereby a hydroplaning phenomenon is effectively inhibited.

Since the above-described main grooves 3 are provided, the land portion 4 is divided into, for example, middle land portions 7 between the center main groove 6 and the shoulder main grooves 5, and shoulder land portions 8 on the outer sides in the tire axial direction relative to the shoulder main grooves 5.

The middle land portions 7 include, for example, an outer middle land portion 7A between the outer shoulder main groove 5A and the center main groove 6, and an inner middle land portion 7B between the inner shoulder main groove 5B and the center main groove 6. The shoulder land portions 8 include, for example, an outer shoulder land portion 8A between the outer shoulder main groove 5A and the axially-outer edge Po of the tread, and an inner shoulder land portion 8B between the inner shoulder main groove 5B and the axially-inner edge Pi of the tread.

FIG. 3 shows an enlarged view of the outer middle land portion 7A. As shown in FIG. 3, penetrating sipes 10 are formed in the outer middle land portion 7A so as to cross the outer middle land portion over the entire width thereof. In the present specification, although each "sipe" means a slit of which a main portion has a width not larger than 1.5 mm, the "sipe" encompasses a form with an opening having a width larger than 1.5 mm and located on the tread surface side of the land portion.

Each penetrating sipe 10 includes a first tilted portion 11 and a second tilted portion 12 in a tread plan view.

The first tilted portion 11 is tilted relative to the tire axial direction. The first tilted portion 11 in the present embodiment linearly extends so as to be tilted from the center main groove 6 to one side in the tire circumferential direction (in FIG. 3, upward), for example. The angle θ1 of the first tilted portion 11 relative to the tire axial direction is, for example, 20 to 30°.

FIG. 4(a) shows a cross-sectional view of the first tilted portion 11 in FIG. 3, taken along the line B-B. As shown in FIG. 4(a), the first tilted portion 11 has, for example, an unchanging width from a tread surface 2s of the land portion to the bottom.

As shown in FIG. 3, the second tilted portion 12 is located on the outer tread edge Te1 side (shown in FIG. 1, and the same applies below) relative to the first tilted portion 11, for example. The second tilted portion 12 is tilted in a direction opposite to the direction of the first tilted portion 11. The second tilted portion 12 in the present embodiment linearly extends so as to be tilted from the outer shoulder main groove 5A to the one side in the tire circumferential direction, for example.

The angle θ2 of the second tilted portion 12 in the present embodiment relative to the tire axial direction is, for example, preferably smaller than the angle θ1 of the first tilted portion 11 relative to the tire axial direction. Specifically, the angle θ2 of the second tilted portion 12 relative to the tire axial direction is, for example, 18 to 25°.

FIG. 4(b) shows a cross-sectional view of the second tilted portion 12 in FIG. 3, taken along the line C-C. As shown in FIG. 4(b), the second tilted portion 12 includes, for example, a body portion 16 extending with an unchanging width, and an opening 17 having an increased width and located between the body portion 16 and the tread surface 2s of the land portion. Such a second tilted portion 12 serves to improve wet performance.

As shown in FIG. 3, the penetrating sipe 10 has a V-shaped portion 14 at which the above-described first tilted portion 11 and second tilted portion 12 connect to each other in a tread plan view. In the penetrating sipe 10 having such a V-shaped portion 14, sipe walls that face each other come into close contact with each other when lateral force acts on the land portion. Accordingly, the apparent stiffness of the outer middle land portion 7A is improved, whereby the steering stability is improved.

The top 18 of the V-shaped portion 14 of the penetrating sipe 10 is located on the outer tread edge Te1 side relative to the center position 20 in the width direction of the outer middle land portion 7A.

The angle θ3 between the first tilted portion 11 and the second tilted portion 12 is preferably obtuse in order to suppress uneven wear near the top 18. Specifically, the angle θ3 is preferably not smaller than 125° and more preferably not smaller than 130°, and meanwhile, preferably not larger than 140° and more preferably not larger than 135°.

In the outer middle land portion 7A in the present embodiment, outer middle lug sipes 24 which extend from the outer shoulder main groove 5A and which terminate in the outer middle land portion 7A are formed, for example. The above-described penetrating sipes 10 and the outer middle lug sipes 24 are formed alternately in the tire circumferential direction.

Each outer middle lug sipe 24 includes, for example, a third tilted portion 25 and a fourth tilted portion 26.

The third tilted portion 25 extends so as to be tilted in the same direction as the direction of the first tilted portion 11 of each penetrating sipe 10 from the inner end 24i in the tire axial direction of the outer middle lug sipe 24. The third tilted portion 25 in the present embodiment extends along the first tilted portion 11, for example.

The third tilted portion 25 in the present embodiment has, for example, the same cross-sectional shape as that of the first tilted portion 11 (shown in FIG. 4(a), and the same applies below). That is, the third tilted portion 25 is preferably formed so as to have an unchanging width from the tread surface of the land portion to the bottom (not shown).

The fourth tilted portion 26 is located between the third tilted portion 25 and the outer shoulder main groove 5A, for example. The fourth tilted portion 26 is tilted in a direction opposite to the direction of the third tilted portion 25. As a preferable form, the fourth tilted portion 26 in the present embodiment extends along the second tilted portion 12 of each penetrating sipe 10, for example.

The fourth tilted portion 26 has, for example, the same cross-sectional shape as that of the second tilted portion 12 of the penetrating sipe 10 (shown in FIG. 4(b), and the same applies below). That is, the fourth tilted portion 26 includes, for example, a body portion extending with an unchanging width, and an opening having an increased width and located between the body portion and the tread surface of the land portion (not shown). Such a fourth tilted portion 26 serves to improve the wet performance.

The above-described third tilted portion 25 and the fourth tilted portion 26 connect to each other, whereby the outer middle lug sipe 24 has a portion extending along the V-shaped portion 14 of the penetrating sipe 10. In such an outer middle lug sipe 24, sipe walls that face each other come into close contact with each other when lateral force acts on the land portion, whereby the apparent stiffness of the outer middle land portion 7A can be further improved.

FIG. 5 shows an enlarged view of the inner middle land portion 7B. As shown in FIG. 5, a plurality of inner middle sipes 28 are formed in the inner middle land portion 7B.

Each inner middle sipe 28 includes, for example, a central tilted portion 30, and a first side portion 31 and a second side portion 32 provided on both sides in the tire axial direction of the central tilted portion 30.

The central tilted portion 30 linearly extends so as to be tilted relative to the tire axial direction, for example. Such a central tilted portion 30 exhibits an edge effect in the tire circumferential direction and the tire axial direction.

The central tilted portion 30 is, for example, preferably tilted in a direction opposite to the direction of the first tilted portion 11 of each penetrating sipe 10 (shown in FIG. 1). Such a central tilted portion 30 serves to inhibit lateral displacement of the tire.

The angle θ4 of the central tilted portion 30 relative to the tire axial direction is preferably not smaller than 40° and more preferably not smaller than 45°, and meanwhile, preferably not larger than 55° and more preferably not larger than 50°. Such a central tilted portion 30 exhibits an edge effect in the tire circumferential direction and the tire axial direction in a balanced manner.

The central tilted portion 30 in the present embodiment has the same cross-sectional shape as that of the first tilted portion 11, for example. That is, the central tilted portion 30 is preferably formed so as to have an unchanging width from the tread surface of the land portion to the bottom (not shown). In the central tilted portion 30, sipe wall surfaces that face each other come into close contact with each other at the time of contact with a ground. Accordingly, the apparent stiffness of the inner middle land portion 7B is improved, whereby excellent steering stability is obtained.

The first side portion 31 allows communication between, for example, the center main groove 6 and the central tilted portion 30. The second side portion 32 allows communication between, for example, the inner shoulder main groove 5B and the central tilted portion 30.

The first side portion 31 and the second side portion 32 each preferably extend along the tire axial direction. Accordingly, uneven wear is suppressed near the ends of the inner middle sipe 28.

The first side portion 31 and the second side portion 32 each preferably have the same cross-sectional shape as that of the second tilted portion 12 of the penetrating sipe 10. That is, the first side portion 31 and the second side portion 32 each include, for example, a body portion extending with an unchanging width, and an opening having an increased width and located between the body portion and the tread surface of the land portion (not shown). Such a first side portion 31 and a second side portion 32 serve to improve the wet performance.

As shown in FIG. 1, each inner middle sipe 28 is preferably smoothly continuous, via the center main groove 6, with the corresponding penetrating sipe 10 formed in the outer middle land portion 7A. The phrase "sipes are smoothly continuous with each other via a main groove" means that imaginary sipes obtained by imaginarily extending the respective sipes intersect with each other in the main groove. Such arrangement of the sipes allows approximation between the stiffness distributions in the tire circumferential direction of the outer middle land portion 7A and the inner middle land portion 7B, and serves to, for example, obtain linear response to steering at the beginning of cornering.

FIG. 6 shows an enlarged view of the outer shoulder land portion 8A. As shown in FIG. 6, for example, outer shoulder lateral grooves 34 and outer shoulder sipes 35 are formed in the outer shoulder land portion 8A alternately in the tire circumferential direction.

Each outer shoulder lateral groove 34 extends along the tire axial direction in the outer shoulder land portion 8A and terminates in the outer shoulder land portion 8A, for example. Accordingly, the stiffness of the inner side in the tire axial direction of the outer shoulder land portion 8A is improved, whereby excellent steering stability is obtained. Furthermore, such an outer shoulder lateral groove 34 prevents air from flowing thereinto from the outer shoulder main groove 5A, and thus serves to reduce pumping sound.

The angle θ5 of the outer shoulder lateral groove 34 relative to the tire axial direction preferably increases gradually toward the inner side in the tire axial direction, for example. Such an outer shoulder lateral groove 34 can effectively guide water in the groove to the outer tread edge Te1 side during running on a wet road surface.

Each outer shoulder sipe 35 extends from the outer shoulder main groove 5A to the outer side in the tire axial direction and terminates in the outer shoulder land portion 8A, for example.

The outer shoulder sipe 35 includes, for example, an inner portion 36 and an outer portion 37.

The inner portion 36 is in communication with the outer shoulder main groove 5A and extends along the tire axial direction, for example. Such inner portions 36 can suppress strain on ground contact surfaces between the outer shoulder main groove 5A and the inner ends of the outer shoulder lateral grooves 34 and can suppress uneven wear of the ground contact surfaces.

The inner portion 36 preferably has the same cross-sectional shape as that of the second tilted portion 12, for example. That is, the inner portion 36 includes, for example, a body portion extending with an unchanging width, and an opening having an increased width and located between the body portion and the tread surface of the land portion (not shown). Such an inner portion 36 serves to improve the wet performance.

The outer portion 37 connects to, for example, the outer side in the tire axial direction of the inner portion 36. The outer portion 37 terminates in the outer shoulder land portion 8A without reaching the outer tread edge Te1, for example.

The outer portion 37 preferably has, for example, the same cross-sectional shape as that of the first tilted portion 11. That is, the outer portion 37 is, for example, formed so as to have an unchanging width from the tread surface of the land portion to the bottom (not shown). Such an outer portion 37 serves to suppress uneven wear near the outer end of

the outer shoulder sipe 35.

As shown in FIG. 1, each outer shoulder sipe 35 is preferably smoothly continuous with the corresponding outer middle lug sipe 24 via the outer shoulder main groove 5A. Such arrangement of the sipes serves to cause wear to progress evenly at both end edges of the outer shoulder main groove 5A.

FIG. 7 shows an enlarged view of the inner shoulder land portion 8B. As shown in FIG. 7, inner shoulder lateral grooves 38 and inner shoulder sipes 39 are formed in the inner shoulder land portion 8B alternately in the tire circumferential direction, for example.

Each inner shoulder lateral groove 38 has, for example, the same form as that of the outer shoulder lateral groove 34 (shown in FIG. 6). That is, the inner shoulder lateral groove 38 extends along the tire axial direction in the inner shoulder land portion 8B and terminates in the inner shoulder land portion 8B, for example.

Each inner shoulder sipe 39 includes, for example, an inner portion 40 and an outer portion 41 in the same manner as each outer shoulder sipe 35.

The inner portion 40 of the inner shoulder sipe 39 is in communication with the inner shoulder main groove 5B and extends along the tire axial direction, for example. The inner portion 40 of the inner shoulder sipe 39 preferably has, for example, the same cross-sectional shape as that of the second tilted portion 12. That is, the inner portion 40 of the inner shoulder sipe 39 includes, for example, a body portion extending with an unchanging width, and an opening having an increased width and located between the body portion and the tread surface of the land portion (not shown).

The outer portion 41 of the inner shoulder sipe 39 connects to, for example, the inner tread edge Te2 side of the inner portion 40. The outer portion 41 of the inner shoulder sipe 39 preferably extends to, for example, the inner tread edge Te2. Such inner shoulder sipes 39 serve to suppress strain on ground contact surfaces between the inner shoulder lateral grooves 38.

The outer portion 41 of the inner shoulder sipe 39 preferably has, for example, the same cross-sectional shape as that of the first tilted portion 11. That is, the outer portion 41 of the inner shoulder sipe 39 is, for example, formed so as to have an unchanging width from the tread surface of the land portion to the bottom (not shown).

As shown in FIG. 1, each inner shoulder sipe 39 is preferably smoothly continuous with the corresponding inner middle sipe 28 via the inner shoulder main groove 5B. Such arrangement of the sipes serves to cause wear to progress evenly at both end edges of the inner shoulder main groove 5B.

In the pneumatic tire according to the present invention, a shoulder sipe extending in the tire axial direction is formed in at least one of shoulder land portions that are disposed at outermost sides in the tire axial direction of a land portion. The tire in FIGS. 1 and 2 has a form in which each outer shoulder sipe 35 and each inner shoulder sipe 39 are respectively formed in both the outer shoulder land portion 8A and the inner shoulder land portion 8B.

In the tire 1, the tread width Wt (mm) and the depth D (mm) of each main groove satisfy the following expression (I).

[Math. 2]

$$5 \leq \frac{Wt}{2D} \leq 35 \qquad (I)$$

For example, in the tire 1 in FIGS. 1 and 2, the tread width Wt and each of the depths D1, D2, and D3 of the outer shoulder main groove 5A, the inner shoulder main groove 5B, and the center main groove 6 satisfy expression (I). Since expression (I) is satisfied, the block stiffness is improved, and favorable wet grip performance and favorable steering stability tend to be able to be ensured.

$10 \leq Wt/2D \leq 35$ is preferably satisfied, $13 \leq Wt/2D \leq 30$ is more preferably satisfied, and $15 \leq Wt/2D \leq 25$ is further preferably satisfied.

The tread width Wt of the tread portion 2 is the distance from one end to the other end in the axial direction of the tread. In FIGS. 1 and 2, the point Po indicates the axially-outer edge of the tread, the point Pi indicates the axially-inner edge of the tread, and the double-headed arrow Wt indicates the distance (tread width) from the axially-outer edge Po of the tread to the axially-inner edge Pi of the tread. The depth D of each main groove (in FIGS. 1 and 2, each of D1, D2, and D3) is the height in a radial direction from the bottom to the opening of the groove.

In the case of, for example, a pneumatic tire for passenger cars, the depth D of the main groove (in the tire in FIGS. 1 and 2, each of the depth D1 of the outer shoulder main groove 5A, the depth D2 of the inner shoulder main groove 5B, and the depth D3 of the center main groove 6) is preferably 3 to 12 mm, more preferably 4 to 10 mm, and further preferably 5 to 8 mm. If the depth D is set to be the lower limit or larger, favorable drainage performance is obtained, whereby excellent wet performance tends to be obtained. Meanwhile, if the depth D is set to be the upper limit or smaller, favorable stiffness is ensured, whereby excellent steering stability tends to be obtained.

The tread width Wt (mm) and the length Ls (mm) of the shoulder sipe formed in at least one of the shoulder land portions satisfy the following expression (II).

[Math. 3]

$$10 \leq \frac{Ls}{Wt} \times 100 \leq 30 \qquad (II)$$

For example, in the tire in FIGS. 1 and 2, the tread width Wt and the length of the shoulder sipe which is at least one of the length Ls1 of each outer shoulder sipe 35 and the length Ls2 of each inner shoulder sipe 39 formed in the shoulder land portions 8 (the outer shoulder land portion 8A and inner shoulder land portion 8B), satisfy expression (II). From the viewpoint of steering stability and the like, expression (II) is preferably satisfied with the length Ls2 of the inner shoulder sipe 39 among the lengths.

The length Ls of the shoulder sipe is, for example, preferably 10 to 60 mm, more preferably 2 to 50 mm, and further preferably 15 to 45 mm, from the viewpoint of steering stability and the like.

As shown in FIGS. 1 and 7, the length Ls of the shoulder sipe is the length in the tire axial direction of each shoulder sipe.

The tread width Wt is, for example, preferably 140 to 250 mm, more preferably 150 to 220 mm, and further preferably 160 to 200 mm, from the viewpoint of the combined performance of the low fuel consumption performance, the wet grip performance, and the steering stability.

A tire outer diameter is, for example, preferably 600 to 700 mm, more preferably 610 to 690 mm, and further preferably 630 to 680 mm, from the viewpoint of the combined performance of the low fuel consumption performance, the wet grip performance, and the steering stability.

The tire outer diameter refers to the outer diameter of the tire which has been mounted to an applicable rim with no load being applied to the tire.

In a shoulder land portion rubber composition forming the shoulder land portions 8, not less than 4 parts by mass of a low-temperature plasticizer having a solidifying temperature not higher than -10°C, and not less than 3 parts by mass of a resin having a softening point of 60 to 120°C, are contained per 100 parts by mass of a rubber component.

Examples of the rubber component usable for the rubber composition include diene-based rubbers such as isoprene-based rubber, butadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and isobutylene-isoprene rubber (IIR). Examples of the isoprene-based rubber include isoprene rubber (IR), epoxidized isoprene rubber, hydrogenated isoprene rubber, grafted isoprene rubber, natural rubber (NR), deproteinized natural rubber (DPNR), ultra-pure natural rubber (UPNR), epoxidized natural rubber (ENR), hydrogenated natural rubber (HNR), and grafted natural rubber. These rubber components may be used individually, or two or more of these rubber components may be used in combination. Among these rubber components, SBR and BR are preferable.

In the rubber composition, the amount of SBR (the total amount of SBRs) contained in 100% by mass of the rubber component is preferably not less than 30% by mass, more preferably not less than 50% by mass, and further preferably not less than 70% by mass. Regarding the upper limit, the amount is preferably not greater than 95% by mass and more preferably not greater than 90% by mass. If the amount is set to fall within the above-described range, favorable combined performance of the low fuel consumption performance, the wet grip performance, and the steering stability tends to be obtained.

The SBRs preferably include a first styrene-butadiene rubber having a styrene content not greater than 30% by mass and a second SBR having a styrene content not less than 35% by mass, from the viewpoint of the low fuel consumption performance, the wet grip performance, and the steering stability.

The styrene content of the first SBR is not greater than 30% by mass and preferably not greater than 28% by mass. Meanwhile, the styrene content is preferably not less than 5% by mass, more preferably not less than 10% by mass, further preferably not less than 20% by mass, and particularly preferably not less than 25% by mass.

The vinyl content of the first SBR is preferably not less than 20% by mol, more preferably not less than 30% by mol, and further preferably not less than 40% by mol. Meanwhile, the vinyl content is preferably not greater than 80% by mol and more preferably not greater than 70% by mol.

The weight-average molecular weight (Mw) of the first SBR is preferably not less than 500 thousand, more preferably not less than 600 thousand, and further preferably not less than 700 thousand. Meanwhile, although the upper limit for the Mw is not particularly limited, the Mw is preferably not greater than 1 million and more preferably not greater than 900 thousand.

In the rubber composition, the amount of the first SBR contained in 100% by mass of the rubber component is preferably not less than 20% by mass, more preferably not less than 30% by mass, and further preferably not less than 35% by mass. Regarding the upper limit, the amount is preferably not greater than 80% by mass, more preferably not greater than 70% by mass, and further preferably not greater than 65% by mass.

The styrene content of the second SBR is not less than 35% by mass and preferably not less than 40% by

mass. Meanwhile, the styrene content is preferably not greater than 70% by mass, more preferably not greater than 60% by mass, and further preferably not greater than 50% by mass.

The vinyl content of the second SBR is preferably not less than 10% by mol, more preferably not less than 20% by mol, and further preferably not less than 30% by mol. Meanwhile, the vinyl content is preferably not greater than 60% by mol and more preferably not greater than 50% by mol.

The weight-average molecular weight (Mw) of the second SBR is preferably not less than 700 thousand, more preferably not less than 800 thousand, and further preferably not less than 900 thousand. Meanwhile, although the upper limit for the Mw is not particularly limited, the Mw is preferably not greater than 1.5 million and more preferably not greater than 1.3 million.

In the rubber composition, the amount of the second SBR contained in 100% by mass of the rubber component is preferably not less than 10% by mass, more preferably not less than 15% by mass, and further preferably not less than 20% by mass. Regarding the upper limit, the amount is preferably not greater than 50% by mass and more preferably not greater than 40% by mass.

In the present specification, the styrene content of each SBR is calculated by $^1$H-NMR measurement. The vinyl content thereof is the vinyl content of the butadiene moiety (unit quantity of vinyl groups in the butadiene structure) and calculated by the $^1$H-NMR measurement. The Mw can be obtained by conversion, based on a polystyrene standard, of a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

Each of the first SBR and the second SBR can be prepared by setting, as appropriate, the blending amounts of monomer materials such as styrene and 1,3-butadiene and employing a known method such as emulsion polymerization, solution polymerization, or anion polymerization. Each of these SBRs may be an SBR obtained by modifying the main chain and/or an end of a rubber with a modifier, or an SBR that is obtained by, for example, modification with a multifunctional modifier such as tin tetrachloride and silicon tetrachloride and that has a branched structure in a part thereof. Among such SBRs, an SBR obtained by modifying the main chain and/or an end of a first SBR and/or a second SBR with a modifier having a functional group that interacts with silica, is preferable.

Examples of the above-described functional group that interacts with silica include an amino group, an amide group, an alkoxysilyl group, an isocyanate group, an imino group, an imidazole group, a urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, and an epoxy group. These functional groups may have a substituent. Among these functional groups, primary, secondary, and tertiary amino groups (in particular, a glycidylamino group), an epoxy group, a hydroxyl group, an alkoxy group (preferably, an alkoxy group having 1 to 6 carbon atoms), an alkoxysilyl group (preferably, an alkoxysilyl group having 1 to 6 carbon atoms), and a hydrocarbon group are preferable.

As the modified SBR having the above-described functional group that interacts with silica, an SBR (S-modified SBR) obtained by modification with a compound (modifier) represented by the following formula, is preferable.

[Chem. 1]

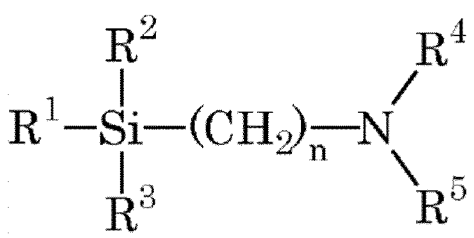

In the above-described formula, $R^1$, $R^2$, and $R^3$ are the same as or different from one another, and each represent an alkyl group, an alkoxy group, a silyloxy group, an acetal group, a carboxyl group (-COOH), a mercapto group (-SH), or a derivative thereof. $R^4$ and $R^5$ are the same as or different from each other, and each represent a hydrogen atom or an alkyl group. $R^4$ and $R^5$ may be linked together to form a ring structure together with the nitrogen atom. "n" represents an integer.

As the above-described S-modified SBR, an SBR (S-modified S-SBR (modified SBR described in Japanese Laid-Open Patent Publication No. 2010-111753, or the like)) obtained by modifying the polymerization ends (active ends) of a solution-polymerized styrene-butadiene rubber (S-SBR) with the compound represented by the above-described formula, is suitably used.

$R^1$, $R^2$, and $R^3$ are each preferably an alkoxy group (an alkoxy group preferably having 1 to 8 carbon atoms

and more preferably having 1 to 4 carbon atoms). $R^4$ and $R^5$ are each preferably an alkyl group (an alkyl group preferably having 1 to 3 carbon atoms). "n" is preferably 1 to 5, more preferably 2 to 4, and further preferably 3. In the case where $R^4$ and $R^5$ are linked together to form a ring structure together with the nitrogen atom, a four- to eight-membered ring is preferably formed. Examples of the alkoxy group include cycloalkoxy groups (a cyclohexyloxy group and the like) and aryloxy groups (a phenoxy group, a benzyloxy group, and the like).

Specific examples of the compound represented by the above-described formula (above-described modifier) include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among these compounds, 3-dimethylaminopropyl trimethoxysilane, 3-dimethylaminopropyl triethoxysilane, and 3-diethylaminopropyl trimethoxysilane are preferable. These compounds may be used singly, or two or more of these compounds may be used in combination.

As the modified SBR having the above-described functional group that interacts with silica, an SBR obtained by modification with a compound (modifier) represented by the following formula can also be suitably used.

[Chem. 2]

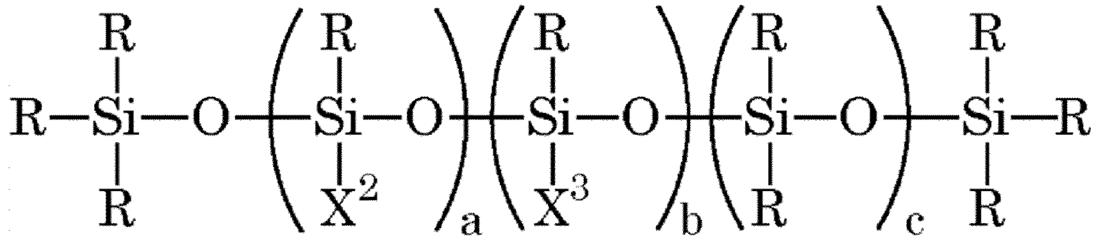

In the above-described formula, "R"s are the same as or different from one another, and each represent a monovalent hydrocarbon group having 1 to 30 carbon atoms. $X^2$ is a group represented by the following formula:

[Chem. 3] $R^{11}\text{-O-}R^{12}\text{-}R^{13}$

(In the formula, $R^{11}$ and $R^{12}$ are the same as or different from each other, and each represent a bivalent hydrocarbon group. $R^{13}$ represents a cyclic ether group.). $X^3$ is a group represented by the following formula:

[Chem. 4]

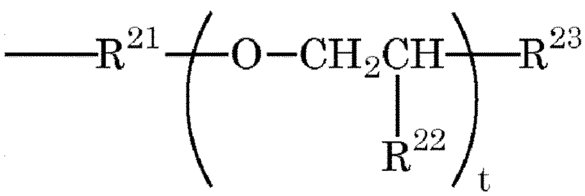

(In the formula, $R^{21}$ represents an alkylene group or an alkylarylene group having 2 to 10 carbon atoms. $R^{22}$ represents a hydrogen atom or a methyl group. $R^{23}$ represents an alkoxy group or an aryloxy group having 1 to 10 carbon atoms. "t" represents an integer of 2 to 20.). "a", "b", and "c" each represent the number of times of repetition of the repeating unit.

As the SBR obtained by modification with the compound (modifier) represented by the above-described formula, an SBR obtained by modifying the polymerization ends (active ends) of a solution-polymerized SBR (S-SBR) with the compound represented by the above-described formula, is suitably used.

"R"s are the same as or different from one another, and each represent a monovalent hydrocarbon group having 1 to 30 carbon atoms. The monovalent hydrocarbon group may be any of linear, branched linear, and cyclic monovalent hydrocarbon groups, and examples thereof include aliphatic hydrocarbon groups having 1 to 30 carbon atoms, alicyclic hydrocarbon groups having 3 to 30 carbon atoms, and aromatic hydrocarbon groups having 6 to 30 carbon atoms. Among these monovalent hydrocarbon groups, aliphatic hydrocarbon groups having 1 to 30 carbon atoms are preferable, aliphatic hydrocarbon groups having 1 to 20 carbon atoms are more preferable, aliphatic hydrocarbon groups having 1 to 10 carbon atoms are further preferable, and aliphatic hydrocarbon groups having 1 to 3 carbon atoms are particularly preferable. Preferable examples of "R" include alkyl groups having the above-described number of carbon

atoms. Specific examples of the alkyl groups include a methyl group, an ethyl group, an n-propyl group, an isopropyl group, an n-butyl group, an isobutyl group, a sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group. Among these alkyl groups, a methyl group is particularly preferable.

$R^{11}$ and $R^{12}$ in $X^2$ are the same as or different from each other, and each represent a bivalent hydrocarbon group. Examples of the bivalent hydrocarbon group include branched or unbranched alkylene groups having 1 to 30 carbon atoms, branched or unbranched alkenylene groups having 2 to 30 carbon atoms, branched or unbranched alkynylene groups having 2 to 30 carbon atoms, and arylene groups having 6 to 30 carbon atoms. Among these bivalent hydrocarbon groups, branched or unbranched alkylene groups having 1 to 30 carbon atoms are preferable, branched or unbranched alkylene groups having 1 to 15 carbon atoms are more preferable, branched or unbranched alkylene groups having 1 to 5 carbon atoms are further preferable, and unbranched alkylene groups having 1 to 3 carbon atoms are particularly preferable. Preferable examples of $R^{11}$ and $R^{12}$ include alkylene groups having the above-described number of carbon atoms, and specific examples of the alkylene groups include a methylene group, an ethylene group, a propylene group, an isopropylene group, a butylene group, an isobutylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. Among these alkylene groups, a methylene group, an ethylene group, and a propylene group are particularly preferable.

$R^{13}$ in $X^2$ represents a cyclic ether group. Examples of the cyclic ether group include: cyclic ether groups having one ether bond, such as an oxirane group, an oxetane group, an oxolane group, an oxane group, an oxepane group, an oxocane group, an oxonane group, an oxecane group, an oxete group, and an oxol group; cyclic ether groups having two ether bonds, such as a dioxolane group, a dioxane group, a dioxepane group, and a dioxecane group; and cyclic ether groups having three ether bonds, such as a trioxane group. Among these cyclic ether groups, cyclic ether groups having one ether bond and 2 to 7 carbon atoms are preferable, cyclic ether groups having one ether bond and 2 to 5 carbon atoms are more preferable, and an oxirane group is further preferable. The cyclic ether group preferably has no unsaturated bond in the cyclic backbone thereof. A hydrogen atom of the above-described cyclic ether group may be substituted with the above-described monovalent hydrocarbon group.

$R^{21}$ in $X^3$ represents any of alkylene groups or alkylarylene groups having 2 to 10 carbon atoms. Among these alkylene groups and alkylarylene groups, branched or unbranched alkylene groups having 2 to 8 carbon atoms are preferable, branched or unbranched alkylene groups having 2 to 6 carbon atoms are more preferable, branched or unbranched alkylene groups having 2 to 4 carbon atoms are further preferable, and branched or unbranched alkylene groups having 3 carbon atoms are particularly preferable. Preferable examples of $R^{21}$ include alkylene groups having the above-described number of carbon atoms, and specific examples of the alkylene groups include an ethylene group, a propylene group, an isopropylene group, a butylene group, an isobutylene group, a pentylene group, a hexylene group, a heptylene group, an octylene group, a nonylene group, and a decylene group. Among these alkylene groups, an ethylene group, a propylene group, an isopropylene group, a butylene group, and an isobutylene group are particularly preferable, and a propylene group and an isopropylene group are most preferable.

$R^{22}$ in $X^3$ represents a hydrogen atom or a methyl group and is particularly preferably a hydrogen atom.

$R^{23}$ in $X^3$ represents any of alkoxy groups or aryloxy groups having 1 to 10 carbon atoms. Among these alkoxy groups and aryloxy groups, branched or unbranched alkoxy groups having 1 to 8 carbon atoms are preferable, branched or unbranched alkoxy groups having 1 to 6 carbon atoms are more preferable, and branched or unbranched alkoxy groups having 1 to 4 carbon atoms are further preferable. Preferable examples of $R^{23}$ include alkoxy groups having the above-described number of carbon atoms, and specific examples of the alkoxy groups include a methoxy group, an ethoxy group, a propoxy group, an isopropoxy group, a butoxy group, an isobutoxy group, a pentyloxy group, a hexyloxy group, a heptyloxy group, and an octyloxy group. Among these alkoxy groups, a methoxy group, an ethoxy group, a propoxy group, and a butoxy group are particularly preferable, and a methoxy group is most preferable.

"t" in $X^3$ represents an integer of 2 to 20 and is particularly preferably 2 to 8.

As the method for modifying an SBR with a modifier, a conventionally known method can be employed, and, for example, a styrene-butadiene rubber can be modified by bringing the styrene-butadiene rubber and the aforementioned compound into contact with each other. Specific examples of the method include a method in which an SBR is prepared through solution polymerization, and then a predetermined amount of the aforementioned compound is added into the rubber solution so that a polymerization end (active end) of the SBR and the modifier react with each other.

As the SBR, for example, SBRs manufactured by and available from Sumitomo Chemical Co., Ltd., JSR Corporation, Asahi Kasei Corporation, Zeon Corporation, etc., can be used.

In the rubber composition, the amount of BR contained in 100% by mass of the rubber component is preferably not less than 5% by mass and more preferably not less than 10% by mass. Meanwhile, regarding the upper limit, the amount is preferably not greater than 50% by mass, more preferably not greater than 35% by mass, and further preferably

not greater than 25% by mass. If the amount falls within the above-described range, favorable low fuel consumption performance, wear resistance, and the like tend to be able to be ensured.

As the BR, for example, a BR having a high cis content, a BR having a low cis content, a BR containing syndiotactic polybutadiene crystal, and the like can be used. These BRs may be used singly, or two or more of these BRs may be used in combination.

The cis content of the BR is preferably not less than 90% by mass, more preferably not less than 95% by mass, and further preferably not less than 98% by mass. The upper limit for the cis content is not particularly limited. If the cis content falls within the above-described range, the aforementioned advantageous effect tends to be more favorably obtained.

The cis content of the BR can be measured by infrared absorption spectrometry.

The BR may be an unmodified BR or a modified BR, and examples of the modified BR include a modified BR obtained by modification with the aforementioned modifier.

As the BR, for example, products of Ube Industries, Ltd., JSR Corporation, Asahi Kasei Corporation, Zeon Corporation, etc., can be used.

The solidifying temperature of the above-described low-temperature plasticizer is not higher than -10°C and preferably not higher than -15°C. Meanwhile, regarding the lower limit, the solidifying temperature is preferably not lower than -100°C, more preferably not lower than -50°C, and further preferably not lower than -30°C. If the solidifying temperature falls within the above-described range, favorable combined performance of the low fuel consumption performance, the wet grip performance, and the steering stability tends to be obtained.

In the present invention, the solidifying temperature is a value measured by the following method.

A sample is put into and sealed in an aluminum cell, and the aluminum cell is inserted into a sample holder of a differential scanning calorimeter (DSC-60A, manufactured by Shimadzu Corporation). Then, while the sample holder is being heated to 150°C at 10°C/min. in a nitrogen atmosphere, an endothermic peak is observed. The obtained endothermic peak is regarded as a solidifying point.

In the above-described rubber composition, the amount of the above-described low-temperature plasticizer contained per 100 parts by mass of the rubber component is not less than 4 parts by mass, preferably not less than 5 parts by mass, and more preferably not less than 6 parts by mass. Accordingly, favorable combined performance of the low fuel consumption performance, the wet grip performance, and the steering stability tends to be obtained. Although the upper limit is not particularly limited, the amount is preferably not greater than 50 parts by mass, more preferably not greater than 30 parts by mass, and further preferably not greater than 20 parts by mass.

The kinematic viscosity of the above-described low-temperature plasticizer at 40°C is preferably not greater than 60 $mm^2/s$, more preferably not greater than 50 $mm^2/s$, and further preferably not greater than 45 $mm^2/s$. If the kinematic viscosity is set to be the upper limit or less, the wet grip performance tends to be able to be improved without causing the low fuel consumption performance to deteriorate. Although the lower limit is not particularly limited, the kinematic viscosity is preferably not less than 5 $mm^2/s$ and more preferably not less than 10 $mm^2/s$.

The kinematic viscosity is a value measured under a condition of 40°C according to JIS K2283-2000.

Examples of the above-described low-temperature plasticizer include oil. Examples of the oil include process oils, vegetable fats and oils, and mixtures thereof. As the process oils, for example, paraffinic process oils, aromatic process oils, naphthenic process oils, and the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used singly, or two or more of these oils may be used in combination. Among these oils, process oils are preferable.

As the oil, for example, products of Idemitsu Kosan Co., Ltd., Sankyo Yuka Kogyo K.K., Japan Energy Corporation, Olisoy, H&R, Hokoku Corporation, Showa Shell Sekiyu K.K., FUJI KOSAN COMPANY, LTD., etc., can be used.

As the above-described low-temperature plasticizer, for example, a compound such as a phosphoric acid ester, a phthalic acid ester, an aliphatic polybasic acid ester, a trimellitic acid ester, an acetic ester, or a ricinoleic acid ester, or a mixture thereof can also be suitably used. These low-temperature plasticizers may be used singly, or two or more of these low-temperature plasticizers may be used in combination. Among these low-temperature plasticizers, a phosphoric acid ester, a phthalic acid ester, and an aliphatic polybasic acid ester are preferable, and an aliphatic polybasic acid ester is more preferable.

It is possible to use, as the phosphoric acid ester, a known phosphoric acid ester-based plasticizer such as a monoester, a diester, or a triester of: phosphoric acid; and a monoalcohol having 1 to 12 carbon atoms or a (poly)oxyalkylene adduct thereof. Specific examples of the phosphoric acid ester-based plasticizer include tris(2-ethylhexyl)phosphate, trimethyl phosphate, triethyl phosphate, tributyl phosphate, triphenyl phosphate, tricresyl phosphate, trixylenyl phosphate, cresyl diphenyl phosphate, and 2-ethylhexyl diphenyl phosphate.

It is possible to use, as the phthalic acid ester, a known phthalic acid ester-based plasticizer such as a diester of: phthalic acid; and an alcohol having about 1 to 13 carbon atoms. Specific examples of the phthalic acid ester-based

plasticizer include bis(2-ethylhexyl)phthalate, dimethyl phthalate, diethyl phthalate, dibutyl phthalate, diisodecyl phthalate, butyl benzyl phthalate, diisononyl phthalate, and ethyl phthalyl ethyl glycolate.

Examples of the aliphatic polybasic acid ester include aliphatic dibasic acid esters and aliphatic tribasic acid esters. Among these aliphatic polybasic acid esters, aliphatic dibasic acid esters such as adipic acid esters, azelaic acid esters, sebacic acid esters, maleic acid esters, and fumaric acid esters are preferable.

Among these aliphatic dibasic acid esters, a compound represented by the following formula can be suitably used.

[Chem. 5]

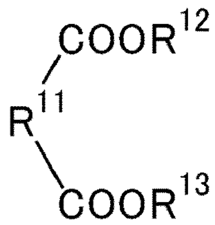

[In the formula, $R^{11}$ represents a bivalent saturated or unsaturated hydrocarbon group. $R^{12}$ and $R^{13}$ are the same as or different from each other, and each represent a branched or unbranched alkyl group or a group represented by $-(R^{14}-O)_n-R^{15}$ (n "$R^{14}$"s are the same as or different from one another, and each represent a branched or unbranched alkylene group. $R^{15}$ represents a branched or unbranched alkyl group. "n" represents an integer.)]

The bivalent saturated or unsaturated hydrocarbon group represented by $R^{11}$ may be branched or unbranched, and examples thereof include alkylene groups, alkenylene groups, and arylene groups. The number of carbon atoms of the saturated or unsaturated hydrocarbon group is preferably 1 to 10 and more preferably 2 to 6. Specific examples of the alkylene group include a methylene group, an ethylene group, a propylene group, a butylene group, a pentylene group, a hexylene group, a heptylene group, an octylene group, a nonylene group, and a decylene group. Specific examples of the alkenylene group include a vinylene group, a 1-propenylene group, and a 2-propenylene group. Specific examples of the arylene group include a phenylene group, a tolylene group, and a xylylene group.

Regarding $R^{12}$ and $R^{13}$, the number of carbon atoms of the branched or unbranched alkyl group is preferably 1 to 15 and more preferably 4 to 10. Specific examples of the branched or unbranched alkyl group include a methyl group, an ethyl group, an n-propyl group, an isopropyl group, an n-butyl group, an iso-butyl group, a sec-butyl group, a tert-butyl group, a pentyl group, a hexyl group, a heptyl group, an octyl group, a nonyl group, and a decyl group.

Regarding the group represented by $-(R^{14}-O)_n-R^{15}$ in $R^{12}$ and $^{13}$, the number of carbon atoms of the branched or unbranched alkylene group represented by $R^{14}$ is preferably 1 to 3. The number of carbon atoms of the branched or unbranched alkyl group represented by $R^{15}$ is preferably 1 to 10 and more preferably 2 to 6. Specific examples of the alkylene group and the alkyl group include the same alkylene groups and alkyl groups as those described above. The integer "n" is preferably 1 to 10, more preferably 1 to 5, and further preferably 1 to 3.

Preferable examples of the aliphatic dibasic acid ester represented by the aforementioned formula include bis(alkoxyalkoxyalkyl)adipates having the group represented by $-(R^{14}-O)_n-R^{15}$, such as bis[2-(2-butoxyethoxy)ethyl] adipate. Other examples of the aliphatic dibasic acid ester include di-n-butyl adipate and diisobutyl adipate. These aliphatic dibasic acid esters may be used singly, or two or more of these aliphatic dibasic acid esters may be used in combination.

It is possible to use, as the trimellitic acid ester, a known trimellitic acid ester-based plasticizer such as a triester of: trimellitic acid; and a saturated aliphatic alcohol having 8 to 13 carbon atoms. Specific examples of the trimellitic acid ester-based plasticizer include tri-2-ethylhexyl trimellitate, tri-n-octyl trimellitate, tridecyl trimellitate, triisodecyl trimellitate, and di-n-octyl-n-decyl trimellitate.

It is possible to use, as the acetic ester, a known acetic ester-based plasticizer such as an ester of: acetic acid; and mono- or poly-glycerin. Specific examples of the acetic ester-based plasticizer include glyceryl triacetate, 2-ethylhexyl acetate, and a poly-glycerin acetic ester in which the degree of polymerization of poly-glycerin is 2 to 4 and the rate of acetylation is 50 to 100%.

Examples of the ricinoleic acid ester include known ricinoleic acid ester-based plasticizers such as alkyl acetyl ricinoleates (alkyl group: having 1 to 10 carbon atoms) such as methyl acetyl ricinoleate and butyl acetyl ricinoleate.

The above-described low-temperature plasticizer may contain another component other than the above-described compound. Examples of the other component include known plasticizers other than the above-described compound, and polyalkylene glycol alkylethers such as diethylene glycol monobutyl ether.

The proportion of the above-described compound contained in 100% by mass of the above-described low-temperature plasticizer is preferably not less than 80% by mass and more preferably not less than 90% by mass, and may be 100% by mass.

Examples of the above-described low-temperature plasticizer include tris(2-ethylhexyl)phosphate (TOP, solidifying temperature: not higher than -70°C), bis(2-ethylhexyl)sebacate (DOS, solidifying temperature: -62°C), bis(2-ethylhexyl)phthalate (DOP, solidifying temperature: -51°C), and bis[2-(2-butoxyethoxyethyl)ethyl]adipate (BXA, solidifying temperature: -19°C).

The rubber composition contains a resin having a softening point of 60 to 120°C.

Regarding the lower limit, the softening point is preferably not lower than 70°C and more preferably not lower than 75°C. Regarding the upper limit, the softening point is preferably not higher than 110°C, more preferably not higher than 100°C, and further preferably not higher than 95°C. If the softening point is set to fall within the above-described range, favorable combined performance of the low fuel consumption performance, the wet grip performance, and the steering stability tends to be obtained.

In the present specification, the softening point is a softening point that is measured with a ring and ball softening point measuring device according to JIS K6220-1: 2001, and that is a temperature at which a ball has descended.

In the rubber composition, the amount of the resin contained per 100 parts by mass of the rubber component is not less than 3 parts by mass, preferably not less than 4 parts by mass, and more preferably not less than 5 parts by mass. Meanwhile, the amount is preferably not greater than 30 parts by mass, more preferably not greater than 15 parts by mass, further preferably not greater than 10 parts by mass, and particularly preferably not greater than 7 parts by mass. If the amount falls within the above-described range, favorable combined performance of the low fuel consumption performance, the wet grip performance, and the steering stability tends to be obtained.

As the resin, any resin having the aforementioned softening point can be used. Examples thereof include coumarone-indene resins, α-methylstyrene-based resins, terpene-based resins, and alkylphenol-based resins. Among these resins, α-methylstyrene-based resins and coumarone-indene resins are preferable from the viewpoint of the combined performance of the low fuel consumption performance, the wet grip performance, and the steering stability.

The coumarone-indene resins are each a resin that contains coumarone and indene as monomer components that form the backbone (main chain) of the resin. Examples of the monomer components included in the backbone other than coumarone and indene include styrene, α-methylstyrene, methylindene, and vinyltoluene.

Examples of the α-methylstyrene-based resins include α-methylstyrene homopolymers and copolymers of α-methylstyrene and styrene.

Examples of the terpene-based resins include polyterpenes, terpene phenols, aromatic modified terpene resins, and resins obtained by hydrogenation thereof.

The polyterpenes are resins obtained by polymerizing terpene compounds. The terpene compounds are hydrocarbons represented by a composition of $(C_5H_8)_n$ and oxygenated derivatives thereof, and are compounds having, as basic backbones, terpenes classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compound, such as α-pinene resin, β-pinene resin, limonene resin, dipentene resin, and β-pinene/limonene resin. Examples of the terpene phenols include resins obtained by copolymerizing the above-described terpene compound and phenolic compounds, and specific examples of the terpene phenols include resins obtained by condensing the above-described terpene compound, a phenolic compound, and formalin. Examples of the phenolic compound include phenol, bisphenol A, cresol, and xylenol. Examples of the aromatic modified terpene resins include resins obtained by modifying a terpene resin with an aromatic compound. The aromatic compound is not particularly limited as long as the aromatic compound has an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkyl styrenes, alkoxystyrenes, and unsaturated hydrocarbon group-containing styrenes; coumarone; and indene.

The alkylphenol-based resin is not particularly limited, and examples thereof include: alkylphenol-aldehyde condensation resins obtained by reacting alkylphenols with aldehydes such as formaldehyde, acetaldehyde, and furfural by an acid or an alkali catalyst; alkylphenol-alkyne condensation resins obtained by reacting alkylphenols with alkynes such as acetylene; modified alkylphenol resins obtained by modifying these resins by using compounds such as cashew oil, tall oil, linseed oil, various animal oils and plant oils, unsaturated fatty acids, rosin, alkylbenzene resin, aniline, and melamine; and the like. Among these alkylphenol-based resins, alkylphenol-alkyne condensation resins are preferable and alkylphenol-acetylene condensation resins are particularly preferable, from the viewpoint of the advantageous effect of the present invention.

Examples of the alkylphenol forming the alkylphenol-based resin include cresol, xylenol, t-butylphenol, octylphenol, and nonylphenol. Among these alkylphenols, phenols having a branched alkyl group such as t-butylphenol are

preferable, and t-butylphenol is particularly preferable.

The rubber composition preferably contains a filler such as carbon black, silica, calcium carbonate, talc, alumina, clay, aluminum hydroxide, or mica. Among these fillers, carbon black and silica are preferable from the viewpoint of the combined performance of the low fuel consumption performance, the wet grip performance, and the steering stability.

In the rubber composition, the amount of the carbon black contained per 100 parts by mass of the rubber component is preferably not less than 1 part by mass, more preferably not less than 3 parts by mass, and further preferably not less than 5 parts by mass. Meanwhile, the amount is preferably not greater than 50 parts by mass, more preferably not greater than 20 parts by mass, and further preferably not greater than 15 parts by mass. If the amount is set to fall within the above-described range, favorable combined performance of the low fuel consumption performance, the wet grip performance, and the steering stability tends to be obtained.

The nitrogen adsorption specific surface area ($N_2SA$) of the carbon black is preferably not less than 50 $m^2/g$, more preferably not less than 80 $m^2/g$, and further preferably not less than 100 $m^2/g$, from the viewpoint of wet grip performance and steering stability. Although the upper limit for the $N_2SA$ is not particularly limited, the $N_2SA$ is preferably not greater than 250 $m^2/g$, more preferably not greater than 150 $m^2/g$, and further preferably not greater than 130 $m^2/g$, from the viewpoint of low fuel consumption performance, dispersibility, and the like.

The $N_2SA$ of the carbon black is obtained according to JIS K6217-2: 2001.

The carbon black is not particularly limited, and examples thereof include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used singly, or two or more of these carbon blacks may be used in combination.

In the rubber composition, the amount of the silica contained per 100 parts by mass of the rubber component is preferably not less than 30 parts by mass, more preferably not less than 45 parts by mass, and further preferably not less than 55 parts by mass, from the viewpoint of wet grip performance and steering stability. Meanwhile, the amount is preferably not greater than 150 parts by mass, more preferably not greater than 100 parts by mass, and further preferably not greater than 80 parts by mass, from the viewpoint of low fuel consumption performance, dispersibility, and the like.

The nitrogen adsorption specific surface area ($N_2SA$) of the silica is preferably not less than 80 $m^2/g$, more preferably not less than 115 $m^2/g$, and further preferably not less than 150 $m^2/g$. If the $N_2SA$ is set to be the lower limit or greater, favorable wet grip performance and steering stability tend to be obtained. Meanwhile, the $N_2SA$ is preferably not greater than 400 $m^2/g$, more preferably not greater than 250 $m^2/g$, and further preferably not greater than 200 $m^2/g$. If the $N_2SA$ is set to be the upper limit or less, favorable low fuel consumption performance and silica dispersibility tend to be obtained.

The $N_2SA$ of the silica is a value measured by the BET method according to ASTM D3037-93.

The silica is not particularly limited, and, for example, dry-process silica (anhydrous silica), wet-process silica (hydrous silica), and the like can be used. Wet-process silica (hydrous silica) is preferable because of a high silanol group content thereof. As commercially available products, products of Degussa, Tosoh Silica Corporation, Solvay Japan, Ltd., Tokuyama Corporation, etc., can be used. These silicas may be used singly, or two or more of these silicas may be used in combination.

In the case where the rubber composition contains a silica, the rubber composition preferably further contains a silane coupling agent together with the silica.

As the silane coupling agent, any silane coupling agents that have been conventionally used in combination with silica in the rubber industry can be used, and the silane coupling agent is not particularly limited. Examples of the silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto-based silane coupling agents such as 3-mercaptopropyltrimethoxysilane, 2-mercaptoethyltriethoxysilane, and NXT and NXT-Z manufactured by Momentive; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used singly, or two or more of these silane coupling agents may be used in combination. Among these silane coupling

agents, sulfide-based silane coupling agents and mercapto-based silane coupling agents are preferable.

In the case where the rubber composition contains a silane coupling agent, the amount of the silane coupling agent contained per 100 parts by mass of the silica is preferably not less than 2 parts by mass and more preferably not less than 5 parts by mass. If the amount is set to be the lower limit or greater, an effect to be achieved by blending the silane coupling agent tends to be obtained. Meanwhile, the amount is preferably not greater than 20 parts by mass and more preferably not greater than 15 parts by mass. If the amount is set to be the upper limit or less, the effect corresponding to the blending amount is obtained, and favorable processability at the time of kneading tends to be obtained.

The rubber composition preferably contains a sulfur (sulfur vulcanization agent).

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used singly, or two or more of these sulfurs may be used in combination.

In the rubber composition, the amount of the sulfur (sulfur vulcanization agent) contained per 100 parts by mass of the rubber component is preferably not less than 0.5 parts by mass, more preferably not less than 0.8 parts by mass, and further preferably not less than 1.0 part by mass. Regarding the upper limit, the amount is preferably not greater than 5.0 parts by mass, more preferably not greater than 3.0 parts by mass, and further preferably not greater than 2.5 parts by mass.

The rubber composition preferably contains a vulcanization accelerator.

Examples of the vulcanization accelerator include: thiazole-based vulcanization accelerators such as 2-mercaptobenzothiazole, di-2-benzothiazolyl disulfide (DM(2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazolesulfenamide, N-t-butyl-2-benzothiazolyl sulfenamide, N-oxyethylene-2-benzothiazolesulfenamide, N-oxyethylene-2-benzothiazolesulfenamide, and N,N'-diisopropyl-2-benzothiazolesulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination. Among these vulcanization accelerators, sulfenamide-based vulcanization accelerators and guanidine-based vulcanization accelerators are preferable.

In the rubber composition, the amount of the vulcanization accelerator contained per 100 parts by mass of the rubber component is preferably not less than 0.5 parts by mass and more preferably not less than 1.0 part by mass, from the viewpoint of vulcanization characteristics and the like. Meanwhile, the amount is preferably not greater than 8.0 parts by mass, more preferably not greater than 5.0 parts by mass, and further preferably not greater than 3.0 parts by mass.

The rubber composition may contain a wax. The wax is not particularly limited, and examples thereof include: petroleum-based waxes such as paraffin wax and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. These waxes may be used singly, or two or more of these waxes may be used in combination. Among these waxes, petroleum-based waxes are preferable, and paraffin wax is more preferable.

In the rubber composition, the amount of the wax contained per 100 parts by mass of the rubber component is preferably not less than 0.5 parts by mass and more preferably not less than 1 part by mass. Meanwhile, the amount is preferably not greater than 10 parts by mass and more preferably not greater than 6 parts by mass.

The rubber composition may contain an antioxidant.

The antioxidant is not particularly limited, and examples thereof include: naphthylamine-based antioxidants such as phenyl-$\alpha$-naphthylamine; diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenolic antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. These antioxidants may be used singly, or two or more of these antioxidants may be used in combination. Among these antioxidants, p-phenylenediamine-based antioxidants are preferable (N-(1,3-dimethylbutyl)-N'-phenyl-p-phenylenediamine is more preferable).

In the rubber composition, the amount of the antioxidant contained per 100 parts by mass of the rubber component is preferably not less than 0.3 parts by mass and more preferably not less than 1 part by mass. Meanwhile, the amount is preferably not greater than 7 parts by mass, more preferably not greater than 6 parts by mass, and further

preferably not greater than 5 parts by mass.

The rubber composition may contain a fatty acid, particularly, a stearic acid.

As the stearic acid, conventionally known stearic acids can be used. For example, products of NOF CORPORATION, Kao Corporation, FUJIFILM Wako Pure Chemical Corporation, New Japan Chemical Co., Ltd., etc., can be used.

In the rubber composition, the amount of the fatty acid contained per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass.

The rubber composition may contain a zinc oxide.

As the zinc oxide, conventionally known zinc oxides can be used. For example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

In the rubber composition, the amount of the zinc oxide contained per 100 parts by mass of the rubber component is preferably not less than 0.5 parts by mass and more preferably not less than 1 part by mass. Meanwhile, the amount is preferably not greater than 5 parts by mass and more preferably not greater than 4 parts by mass.

Besides the aforementioned components, additives that are generally used in the tire industry can be blended in the rubber composition. Examples of the additives include surfactants.

A known method can be employed as a method for manufacturing the rubber composition. For example, the rubber composition can be manufactured by a method in which: the components are kneaded by using a rubber kneading device such as an open roll, a Banbury mixer, or a kneader; and then vulcanization is performed.

The kneading conditions are as follows. In a base kneading step of kneading the additives other than a cross-linking agent (vulcanizing agent) and the vulcanization accelerator, the kneading temperature is ordinarily 100 to 180°C and preferably 120 to 170°C. In a finish kneading step of kneading the vulcanizing agent and the vulcanization accelerator, the kneading temperature is ordinarily not higher than 120°C and preferably 85 to 110°C. A composition obtained by kneading the vulcanizing agent and the vulcanization accelerator is ordinarily subjected to vulcanization processing such as press vulcanization. The vulcanization temperature is ordinarily 140 to 190°C and preferably 150 to 185°C.

The tire 1 is manufactured by, for example, an ordinary method using a vulcanized rubber composition obtained by vulcanizing an unvulcanized rubber composition. Specifically, the unvulcanized rubber composition obtained by blending the above-described various components is extruded into the shape of each member (for example, a tread having shoulder land portions formed thereon) of the tire and shaped on a tire-shaping machine by an ordinary method together with other tire members, to form an unvulcanized tire. The unvulcanized tire is heated and pressurized in a vulcanizing machine, to obtain the tire 1.

The tire 1 is suitably used as a tire for passenger cars, a tire for trucks and buses, a tire for motorcycles, a tire for racing, etc., and is particularly suitably used as a tire for passenger cars.

Although the pneumatic tire according to the present invention has been described above in detail, the present invention is not limited to the above-described specific embodiment and various modifications can be made to implement the present invention, without departing from the scope of the claims.

EXAMPLES

Pneumatic tires having a size of 175/65R17 and the basic tread pattern in FIG. 1 were produced as test tires. The low fuel consumption performance, the wet grip performance, and the steering stability of each test tire were tested. Common specifications and test methods for the test tires are indicated as follows. The results of the tests are indicated in tables. Reference comparative examples in Tables 2 and 4 are Comparative Examples 1-1 and 2-1, respectively.

Mount rim: 18×5JJ
Tire internal pressure: 260 kPa
Test vehicle: a front-wheel-drive car having an engine displacement of 2400 cc
Test tire-mounted position: all wheels

The compositions of rubbers A to H and rubbers L to S used as tread rubbers are indicated in Tables 1 and 3, respectively. Various chemicals indicated in Tables 1 and 3 are indicated as follows.

SBR 1: SBR 1 produced by Production Example 1 described below
SBR 2: SBR 2 produced by Production Example 2 described below
BR: BR150B (cis content: 98% by mass) manufactured by Ube Industries, Ltd.
Silica: ULTRASIL VN3 ($N_2SA$: 175 $m^2/g$) manufactured by Evonik Degussa GmbH
Carbon black: DIABLACK I ($N_2SA$: 114 $m^2/g$) manufactured by Mitsubishi Chemical Corporation
Silane coupling agent: Si69 (bis(3-triethoxysilylpropyl)tetrasulfide) manufactured by Evonik Degussa GmbH

Plasticizer 1: Diana Process AH-24 (aromatic process oil, solidifying temperature: 5°C, kinematic viscosity at 40°C: 2000 $mm^2/s$) manufactured by Idemitsu Kosan Co., Ltd.
Plasticizer 2: process oil PW-32 (paraffinic process oil, solidifying temperature: - 18°C, kinematic viscosity at 40°C: 30 $mm^2/s$) manufactured by Idemitsu Kosan Co., Ltd.
Plasticizer 3: DOS (bis(2-ethylhexyl)sebacate, solidifying temperature: -62°C, kinematic viscosity at 40°C: 10 $mm^2/s$) manufactured by DAIHACHI CHEMICAL INDUSTRY CO., LTD.
Plasticizer 4: TOP (tris(2-ethylhexylphosphate), solidifying temperature: not higher than -70°C, kinematic viscosity at 40°C: 12 $mm^2/s$) manufactured by DAIHACHI CHEMICAL INDUSTRY CO., LTD.
Resin 1: SYLVARES SA85 ($\alpha$-methylstyrene-based resin (a copolymer of $\alpha$-methylstyrene and styrene), softening point: 85°C) manufactured by Arizona Chemical Company
Resin 2: NOVARES C30 (coumarone-indene resin, softening point: 30°C) manufactured by Rutgers Chemicals AG
Wax: OZOACE 0355 manufactured by NIPPON SEIRO CO., LTD.
Antioxidant: NOCRAC 6C (N-phenyl-N'-(1,3-dimethylbutyl)-p-phenylenediamine) manufactured by Ouchi Shinko Chemical Industrial Co., Ltd.
Stearic acid: stearic acid "Tsubaki" manufactured by NOF CORPORATION
Zinc oxide: Zinc Oxide JIS#3 manufactured by HAKUSUI TECH CO., LTD.
Sulfur: powdery sulfur manufactured by Tsurumi Chemical Industry Co., Ltd.
Vulcanization accelerator 1: NOCCELER NS (N-t-butyl-2-benzothiazyl sulfenamide) manufactured by Ouchi Shinko Chemical Industrial Co., Ltd.
Vulcanization accelerator 2: NOCCELER D (N,N'-diphenylguanidine) manufactured by Ouchi Shinko Chemical Industrial Co., Ltd.

<Production of End Modifier>

In a nitrogen atmosphere, 23.6 g of 3-(N,N-dimethylamino)propyltrimethoxysilane(3-dimethylaminopropyl trimethoxysilane) (manufactured by AZmax) was put into a 100-ml measuring flask, and hexanoic anhydride (manufactured by KANTO CHEMICAL CO., INC.) was further added thereto such that the total amount of the contents was 100 ml, thereby producing an end modifier.

<Production Example 1>

18 L of n-hexane, 540 g of styrene (manufactured by KANTO CHEMICAL CO., INC.), 1460 g of butadiene, and 17 mmol of tetramethylethylenediamine were put into a 30-L pressure-resistant vessel sufficiently purged with nitrogen, and the temperature of the mixture was increased to 40°C. Next, 10.5 mL of butyllithium was added to the mixture, and then the temperature of the mixture was increased to 50°C and the mixture was agitated for three hours. Next, 3.5 mL of a 0.4-mol/L silicon tetrachloride/hexane solution was added to the mixture, and the mixture was agitated for 30 minutes. Next, 30 mL of the above-described end modifier was added to the mixture, and the mixture was agitated for 30 minutes. 2 mL of methanol (manufactured by KANTO CHEMICAL CO., INC.) in which 0.2 g of 2,6-tert-butyl-p-cresol (manufactured by Ouchi Shinko Chemical Industrial Co., Ltd.) had been dissolved was added to the reaction solution, and then the reaction solution was put into a stainless-steel vessel containing 18 L of methanol, to collect aggregates. The obtained aggregates were dried under reduced pressure for 24 hours, to obtain SBR 1. The styrene content of the obtained SBR 1 was 28% by mass. The Mw thereof was 717,000, and the vinyl content thereof was 60% by mol.

<Production Example 2>

An autoclave equipped with an agitator was charged with 6000 g of cyclohexane, 150 g of styrene, 450 g of 1,3-butadiene, and tetramethylethylenediamine in an amount equivalent to 1.5 times the molar amount of n-butyllithium to be used. Then, 9.5 millimole of n-butyllithium was added to the mixture to initiate polymerization, at 50°C. After the elapse of 20 minutes from initiation of the polymerization, a mixture of 60 g of styrene and 340 g of 1,3-butadiene was continuously added over 60 minutes. The highest temperature during the polymerization reaction was 70°C.
After the end of the continuous addition, the polymerization reaction was further continued for 40 minutes. After the polymerization conversion rate was confirmed to have become 100%, a small amount of polymerization solution was sampled. An excessive amount of methanol was added to the small amount of polymerization solution having been sampled, to stop the reaction. Then, the solution was dried with air, to obtain a polymer. The polymer was used as a sample to be analyzed by gel permeation chromatography.
Immediately after the small amount of polymerization solution was sampled, polyorganosiloxane A (the compound that is represented by the following formula and that can be synthesized by the method described in "the 4th

series of Experimental Chemistry", edited by the Chemical Society of Japan, 28th volume, and its reference) in an amount equivalent to 0.03 times the molar amount of the n-butyllithium having been used was added in a state of a 10% toluene solution and reacted for 30 minutes. Then, methanol in an amount equivalent to twice the molar amount of the n-butyllithium having been used was added as a polymerization terminator, to obtain a polymerization solution containing conjugated diene-based rubber I. 0.2 parts by mass of IRGANOX 1520 (manufactured by Ciba-Geigy Corporation) per 100 parts by mass of the rubber content was added as an antioxidant to the above-described polymerization solution. Then, the polymerization solvent was removed from the polymerization solution by steam stripping, and the remaining solute was dried in vacuum at 60°C for 24 hours, to obtain SBR 2 in solid form. The styrene content of the obtained SBR 2 was 42% by mass. The Mw thereof was about 1 million, and the vinyl content thereof was 32% by mol.

[Chem. 6]

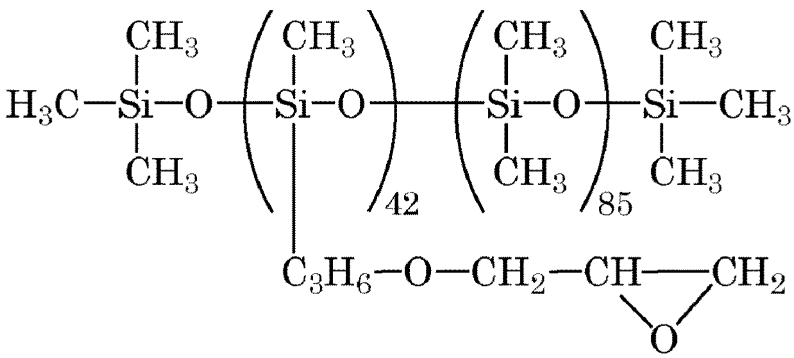

<Low Fuel Consumption Performance>

Running with each test tire was performed under the conditions of a rim (18×5JJ), an internal pressure (260 kPa), a load (3.43 kN), and a speed (80 km/h). The rolling resistance of the tire during the running was measured by using a rolling resistance testing machine. Each rolling resistance is indicated as an index. A higher index indicates better low fuel consumption performance. The index is expressed with the following expression.

(low fuel consumption performance) = (rolling resistance of tire in reference comparative example)/(rolling resistance of tire produced according to each blending formula)×100

<Wet Grip Performance>

The above-described test vehicle was caused to run on an asphalt road surface having a radius of 100 m and having thereon a puddle with a depth of 5 mm and a length of 20 m, and the lateral acceleration (lateral G) of the front wheels was measured. The results are the averages of lateral G at speeds of 50 to 80 km/h, and are indicated as indexes with the values of the reference comparative examples being regarded as 100. A larger numerical value indicates better wet grip performance.

<Steering Stability>

Sensory evaluation was made by a driver for steering stability when the above-described test vehicle was caused to run on an asphalt circuit track. The results are scores with the values of the reference comparative examples being regarded as 100. A larger numerical value indicates better steering stability.

[Table 1]

| | | Rubber A | Rubber B | Rubber C | Rubber D | Rubber E | Rubber F | Rubber G | Rubber H |
|---|---|---|---|---|---|---|---|---|---|
| Blending amount (parts by mass) | SBR 1 | 55 | 55 | 55 | 55 | 55 | 55 | 55 | 55 |
| | SBR 2 | 30 | 30 | 30 | 30 | 30 | 30 | 30 | 30 |
| | BR | 15 | 15 | 15 | 15 | 15 | 15 | 15 | 15 |
| | Silica | 65 | 65 | 65 | 65 | 65 | 65 | 65 | 65 |
| | Carbon black | 10 | 10 | 10 | 10 | 10 | 10 | 10 | 10 |
| | Silane coupling agent | 5 | 5 | 5 | 5 | 5 | 5 | 5 | 5 |
| | Plasticizer 1 | 5 | 5 | 15 | 5 | 5 | 15 | 5 | 5 |
| | Plasticizer 2 | 10 | - | - | 10 | - | - | - | - |
| | Plasticizer 3 | - | 10 | - | - | 10 | - | - | - |
| | Plasticizer 4 | - | - | - | - | - | - | - | 10 |
| | Resin 1 | 4 | 4 | 4 | - | - | - | - | 4 |
| | Resin 2 | - | - | - | 4 | 4 | 4 | - | - |
| | Antioxidant | 2 | 2 | 2 | 2 | 2 | 2 | 2 | 2 |
| | Stearic acid | 2 | 2 | 2 | 2 | 2 | 2 | 2 | 2 |
| | Zinc oxide | 2 | 2 | 2 | 2 | 2 | 2 | 2 | 2 |
| | Wax | 2 | 2 | 2 | 2 | 2 | 2 | 2 | 2 |
| | Sulfur | 1.5 | 1.5 | 1.5 | 1.5 | 1.5 | 1.5 | 1.5 | 1.5 |
| | Vulcanization accelerator 1 | 1.5 | 1.5 | 1.5 | 1.5 | 1.5 | 1.5 | 1.5 | 1.5 |
| | Vulcanization accelerator 2 | 1 | 1 | 1 | 1 | 1 | 1 | 1 | 1 |

[Table 2]

| | Examples | | | | | | |
|---|---|---|---|---|---|---|---|
| | 1-1 | 1-2 | 1-3 | 1-4 | 1-5 | 1-6 | 1-7 |
| Wt/2D (Wt: tread width (mm), D: depth of main groove (mm)) | 20 | 20 | 10 | 25 | 20 | 20 | 20 |
| Ls2/Wt×100(%) (Ls2: length of inner shoulder sipe (mm), Wt: tread width (mm)) | 20 | 20 | 20 | 20 | 15 | 25 | 20 |
| Wt (mm) | 200 | 200 | 160 | 250 | 200 | 200 | 200 |
| D (mm) | 5 | 5 | 8 | 5 | 5 | 5 | 5 |
| Ls2 (mm) | 40 | 40 | 32 | 50 | 30 | 50 | 40 |
| Tire outer diameter (mm) | 650 | 650 | 650 | 650 | 650 | 650 | 650 |
| Tread rubber | Rubber A | Rubber B | Rubber A | Rubber A | Rubber A | Rubber A | Rubber H |
| (a) Low fuel consumption performance | 120 | 122 | 120 | 120 | 120 | 120 | 125 |
| (b) Wet grip performance | 110 | 108 | 105 | 112 | 108 | 115 | 105 |
| (c) Steering stability | 115 | 113 | 110 | 115 | 115 | 113 | 114 |
| Combined performance (=(a)+(b)+(c)) | 345 | 343 | 335 | 347 | 343 | 348 | 344 |

| | Comparative Examples | | | | | | | | | | |
|---|---|---|---|---|---|---|---|---|---|---|---|
| | 1-1 | 1-2 | 1-3 | 1-4 | 1-5 | 1-6 | 1-7 | 1-8 | 1-9 | 1-10 | 1-11 |
| Wt/2D (Wt: tread width (mm), D: depth of main groove (mm)) | 3 | 20 | 20 | 20 | 20 | 20 | 20 | 50 | 3 | 50 | 20 |
| Ls2/Wt×100(%) (Ls2: length of inner shoulder sipe (mm), Wt: tread width (mm)) | 5 | 20 | 20 | 20 | 20 | 20 | 5 | 5 | 20 | 20 | 50 |
| Wt (mm) | 60 | 200 | 200 | 200 | 200 | 200 | 200 | 500 | 60 | 500 | 200 |
| D (mm) | 10 | 5 | 5 | 5 | 5 | 5 | 5 | 5 | 10 | 5 | 5 |
| Ls2 (mm) | 3 | 40 | 40 | 40 | 40 | 40 | 10 | 25 | 12 | 100 | 100 |
| Tire outer diameter (mm) | 650 | 650 | 650 | 650 | 650 | 650 | 650 | 650 | 650 | 650 | 650 |
| Tread rubber | Rubber G | Rubber C | Rubber D | Rubber E | Rubber F | Rubber G | Rubber A | Rubber A | Rubber A | Rubber A | Rubber A |
| (a) Low fuel consumption performance | 100 | 105 | 104 | 103 | 105 | 104 | 111 | 105 | 110 | 105 | 107 |
| (b) Wet grip performance | 100 | 102 | 104 | 103 | 100 | 100 | 99 | 101 | 99 | 114 | 113 |
| (c) Steering stability | 100 | 110 | 111 | 112 | 109 | 112 | 110 | 108 | 112 | 99 | 98 |
| Combined performance (=(a)+(b)+(c)) | 300 | 317 | 319 | 318 | 314 | 316 | 320 | 314 | 321 | 318 | 318 |

[Table 3]

| | | Rubber L | Rubber M | Rubber N | Rubber O | Rubber P | Rubber Q | Rubber R | Rubber S |
|---|---|---|---|---|---|---|---|---|---|
| Blending amount (parts by mass) | SBR 1 | 50 | 50 | 50 | 50 | 50 | 50 | 50 | 50 |
| | SBR 2 | 25 | 25 | 25 | 25 | 25 | 25 | 25 | 25 |
| | BR | 25 | 25 | 25 | 25 | 25 | 25 | 25 | 25 |
| | Silica | 70 | 70 | 70 | 70 | 70 | 70 | 70 | 70 |
| | Carbon black | 5 | 5 | 5 | 5 | 5 | 5 | 5 | 5 |
| | Silane coupling agent | 5 | 5 | 5 | 5 | 5 | 5 | 5 | 5 |
| | Plasticizer 1 | 5 | 5 | 13 | 5 | 5 | 13 | 5 | 5 |
| | Plasticizer 2 | 8 | - | - | 8 | - | - | - | - |
| | Plasticizer 3 | - | 8 | - | - | 8 | - | - | - |
| | Plasticizer 4 | - | - | - | - | - | - | - | 8 |
| | Resin 1 | 6 | 6 | 6 | - | - | - | - | 6 |
| | Resin 2 | - | - | - | 6 | 6 | 6 | - | - |
| | Antioxidant | 2 | 2 | 2 | 2 | 2 | 2 | 2 | 2 |
| | Stearic acid | 2 | 2 | 2 | 2 | 2 | 2 | 2 | 2 |
| | Zinc oxide | 2 | 2 | 2 | 2 | 2 | 2 | 2 | 2 |
| | Wax | 2 | 2 | 2 | 2 | 2 | 2 | 2 | 2 |
| | Sulfur | 1.5 | 1.5 | 1.5 | 1.5 | 1.5 | 1.5 | 1.5 | 1.5 |
| | Vulcanization accelerator 1 | 1.5 | 1.5 | 1.5 | 1.5 | 1.5 | 1.5 | 1.5 | 1.5 |
| | Vulcanization accelerator 2 | 1 | 1 | 1 | 1 | 1 | 1 | 1 | 1 |

[Table 4]

| | Examples | | | | | | |
|---|---|---|---|---|---|---|---|
| | 2-1 | 2-2 | 2-3 | 2-4 | 2-5 | 2-6 | 2-7 |
| Wt/2D (Wt: tread width (mm), D: depth of main groove (mm)) | 20 | 20 | 10 | 25 | 20 | 20 | 20 |
| Ls2/Wt×100(%) (Ls2: length of inner shoulder sipe (mm), Wt: tread width (mm)) | 20 | 20 | 20 | 20 | 15 | 25 | 20 |
| Wt (mm) | 200 | 200 | 160 | 250 | 200 | 200 | 200 |
| D (mm) | 5 | 5 | 8 | 5 | 5 | 5 | 5 |
| Ls2 (mm) | 40 | 40 | 32 | 50 | 30 | 50 | 40 |
| Tire outer diameter (mm) | 650 | 650 | 650 | 650 | 650 | 650 | 650 |
| Tread rubber | Rubber L | Rubber M | Rubber L | Rubber L | Rubber L | Rubber L | Rubber S |
| (a) Low fuel consumption performance | 119 | 121 | 119 | 119 | 119 | 119 | 122 |
| (b) Wet grip performance | 115 | 113 | 113 | 117 | 112 | 118 | 111 |
| (c) Steering stability | 115 | 114 | 116 | 113 | 118 | 113 | 114 |
| Combined performance (=(a)+(b)+(c)) | 349 | 348 | 348 | 349 | 349 | 350 | 347 |

| | Comparative Examples | | | | | | | | | | |
|---|---|---|---|---|---|---|---|---|---|---|---|
| | 2-1 | 2-2 | 2-3 | 2-4 | 2-5 | 2-6 | 2-7 | 2-8 | 2-9 | 2-10 | 2-11 |
| Wt/2D (Wt: tread width (mm), D: depth of main groove (mm)) | 3 | 20 | 20 | 20 | 20 | 20 | 20 | 50 | 3 | 50 | 20 |
| Ls2/Wt×100(%) (Ls2: length of inner shoulder sipe (mm), Wt: tread width (mm)) | 5 | 20 | 20 | 20 | 20 | 20 | 5 | 5 | 20 | 20 | 50 |
| Wt (mm) | 60 | 200 | 200 | 200 | 200 | 200 | 200 | 500 | 60 | 500 | 200 |
| D (mm) | 10 | 5 | 5 | 5 | 5 | 5 | 5 | 5 | 10 | 5 | 5 |
| Ls2 (mm) | 3 | 40 | 40 | 40 | 40 | 40 | 10 | 25 | 12 | 100 | 100 |
| Tire outer diameter (mm) | 650 | 650 | 650 | 650 | 650 | 650 | 650 | 650 | 650 | 650 | 650 |
| Tread rubber | Rubber R | Rubber N | Rubber O | Rubber P | Rubber Q | Rubber R | Rubber L | Rubber L | Rubber L | Rubber L | Rubber L |
| (a) Low fuel consumption performance | 100 | 98 | 99 | 97 | 95 | 98 | 100 | 101 | 100 | 99 | 98 |
| (b) Wet grip performance | 100 | 103 | 104 | 102 | 105 | 99 | 103 | 104 | 103 | 108 | 108 |
| (c) Steering stability | 100 | 110 | 111 | 113 | 109 | 120 | 115 | 113 | 114 | 104 | 103 |
| Combined performance (=(a)+(b)+(c)) | 300 | 311 | 314 | 312 | 309 | 317 | 318 | 318 | 317 | 311 | 309 |

REFERENCE SIGNS LIST

2: tread portion
3: main grooves
4: land portion
8: shoulder land portion
8A: outer shoulder land portion
8B: inner shoulder land portion
34: outer shoulder lateral groove
35: outer shoulder sipe
38: inner shoulder lateral groove
39: inner shoulder sipe
Wt: tread width
D: depth of main groove
D1: depth of the outer shoulder main groove
D2: depth of the inner shoulder main groove
D3: depth of the center main groove
Ls: length of the shoulder sipe
Ls1: length of outer shoulder sipe 35
Ls2: length of inner shoulder sipe 39
Te1: outer tread edge
Te2: inner tread edge
Po: axially-outer edge of tread
Pi: axially-inner edge of tread

## Claims

**1.** A pneumatic tire (1) comprising a tread portion (2) which has three or more main grooves (3) continuously extending in a tire circumferential direction and has a land portion (4) divided by the main grooves (3), wherein

the main grooves (3) include a pair of shoulder main grooves (5) continuously extending in the tire circumferential direction at locations on both outer sides in a tire axial direction relative to a tire equator (C), and a center main groove (6) continuously extending in the tire circumferential direction between the pair of shoulder main grooves (5),
a shoulder sipe (35, 39) extending in the tire axial direction is formed in at least one of shoulder land portions (8) that are disposed at outermost sides in the tire axial direction of the land portion (4),
in a shoulder land portion rubber composition forming the shoulder land portions (8), not less than 3 parts by mass of a resin having a softening point of 60 to 120 °C are contained per 100 parts by mass of a rubber component, **characterized in that**
a tread width Wt and a depth D of each main groove (3) satisfy the following expression (I),
the tread width Wt and a length Ls of the shoulder sipe (35, 39) formed in at least one of the shoulder land portions (8), satisfy the following expression (II), and,
in the shoulder land portion rubber composition forming the shoulder land portions (8), not less than 4 parts by mass of a low-temperature plasticizer having a solidifying temperature not higher than -10°C are contained per 100 parts by mass of a rubber component.
[Math. 1]

$$5 \leq \frac{Wt}{2D} \leq 35 \qquad (I)$$

$$10 \leq \frac{Ls}{Wt} \times 100 \leq 30 \qquad (II)$$

2. The pneumatic tire (1) according to claim 1, wherein a kinematic viscosity of the low-temperature plasticizer at 40°C, measured at 40 °C according to JIS K2283-2000, is not greater than 60 $mm^2/s$.

## Patentansprüche

1. Luftreifen (1), welcher einen Laufstreifenabschnitt (2) umfasst, der drei oder mehr sich in einer Reifenumfangsrichtung durchgehend erstreckende Hauptrillen (3) aufweist und einen Positivprofilabschnitt (4) aufweist, der durch die Hauptrillen (3) unterteilt ist, wobei

   die Hauptrillen (3) ein Paar von sich in der Reifenumfangsrichtung durchgehend erstreckenden Schulterhauptrillen (5) an Stellen auf beiden äußeren Seiten in einer Reifenaxialrichtung relativ zu einem Reifenäquator (C) und eine sich zwischen dem Paar von Schulterhauptrillen (5) in der Reifenumfangsrichtung durchgehend erstreckende zentrale Hauptrille (6) enthalten,
   ein sich in der Reifenaxialrichtung erstreckender Schultereinschnitt (35, 39) in mindestens einem von Schulter-Positivprofilabschnitten (8) gebildet ist, die an äußeren Rändern in der Reifenaxialrichtung des Positivprofilabschnitts (4) angeordnet sind,
   in einer die Schulter-Positivprofilabschnitte (8) bildenden Schulter-Positivprofilabschnitt-Kautschukzusammensetzung nicht weniger als 3 Massenteile eines Harzes mit einem Erweichungspunkt von 60 bis 120°C pro 100 Massenteile einer Kautschukkomponente enthalten sind, **dadurch gekennzeichnet, dass**
   eine Laufstreifenbreite Wt und eine Tiefe D jeder Hauptrille (3) dem folgenden Ausdruck (I) genügen,
   die Laufstreifenbreite Wt und eine Länge Ls des in mindestens einem der Schulter-Positivprofilabschnitte (8) gebildeten Schultereinschnitts (35, 39) dem folgenden Ausdruck (II) genügen, und
   in der die Schulter-Positivprofilabschnitte (8) bildenden Schulter-Positivprofilabschnitt-Kautschukzusammensetzung nicht weniger als 4 Massenteile eines Tieftemperatur-Weichmachers mit einer Erstarrungstemperatur, die nicht höher liegt als -10°C, pro 100 Massenteile einer Kautschukkomponente enthalten sind.
   [Math. 1]

$$5 \leq \frac{Wt}{2D} \leq 35 \qquad (I)$$

$$10 \leq \frac{Ls}{Wt} \times 100 \leq 30 \qquad (II)$$

2. Luftreifen (1) nach Anspruch 1, wobei eine kinematische Viskosität des Tieftemperatur-Weichmachers bei 40°C, gemessen bei 40°C gemäß JIS K2283-2000, nicht größer ist als 60 $mm^2/s$.

## Revendications

1. Pneumatique (1) comprenant une partie bande de roulement (2) qui présente trois rainures principales (3) ou plus s'étendant de manière continue dans une direction circonférentielle du pneu et présente une partie d'appui (4) subdivisée par les rainures principales (3), dans lequel les rainures principales (3) comportent une paire de rainures principales d'épaulement (5) s'étendant de manière continue dans la direction circonférentielle du pneu à des emplacements sur deux côtés extérieurs dans une direction axiale du pneu par rapport à un centre du pneu (C), et une rainure principale centrale (6) s'étendant de manière continue dans la direction circonférentielle de pneu entre les rainures de la paire de rainures principales d'épaulement (5),

   une lamelle d'épaulement (35, 39) s'étendant dans la direction axiale du pneu est formée dans au moins une des parties d'appui d'épaulement (8) qui sont disposées sur les côtés les plus à l'extérieur dans la direction axiale du pneu de la partie d'appui (4),
   dans une composition de caoutchouc de la partie d'appui d'épaulement formant les parties d'appui d'épaulement (8), pas moins de 3 parties en masse d'une résine présentent un point de ramollissement de 60 à 120 °C sont contenues pour 100 parties en masse d'un composant de caoutchouc, **caractérisé en ce que**
   une largeur Wt de la bande de roulement et une profondeur D de chaque rainure principale (3) satisfont à

l'expression suivante (I),
la largeur Wt de la bande de roulement et une longueur Ls de la lamelle d'épaulement (35, 39) formée dans au moins une des parties d'appui d'épaulement (8), satisfont à l'expression suivante (II), et,
dans la composition de caoutchouc de la partie d'appui d'épaulement formant les parties d'appui d'épaulement (8), pas moins de 4 parties en masse d'un plastifiant basse température présentant une température de solidification non supérieure à -10 °C sont contenues pour 100 parties en masse d'un composant de caoutchouc.
[Expression mathématique 1]

$$5 \leq \frac{Wt}{2D} \leq 35 \qquad (I)$$

$$10 \leq \frac{Ls}{Wt} \times 100 \leq 30 \qquad (II)$$

.

**2.** Pneumatique (1) selon la revendication 1, dans lequel une viscosité cinématique du plastifiant basse température à 40 °C, mesurée à 40 °C selon la norme JIS K2283-2000, n'est pas supérieure à 60 $mm^2/s$.

Fig. 1

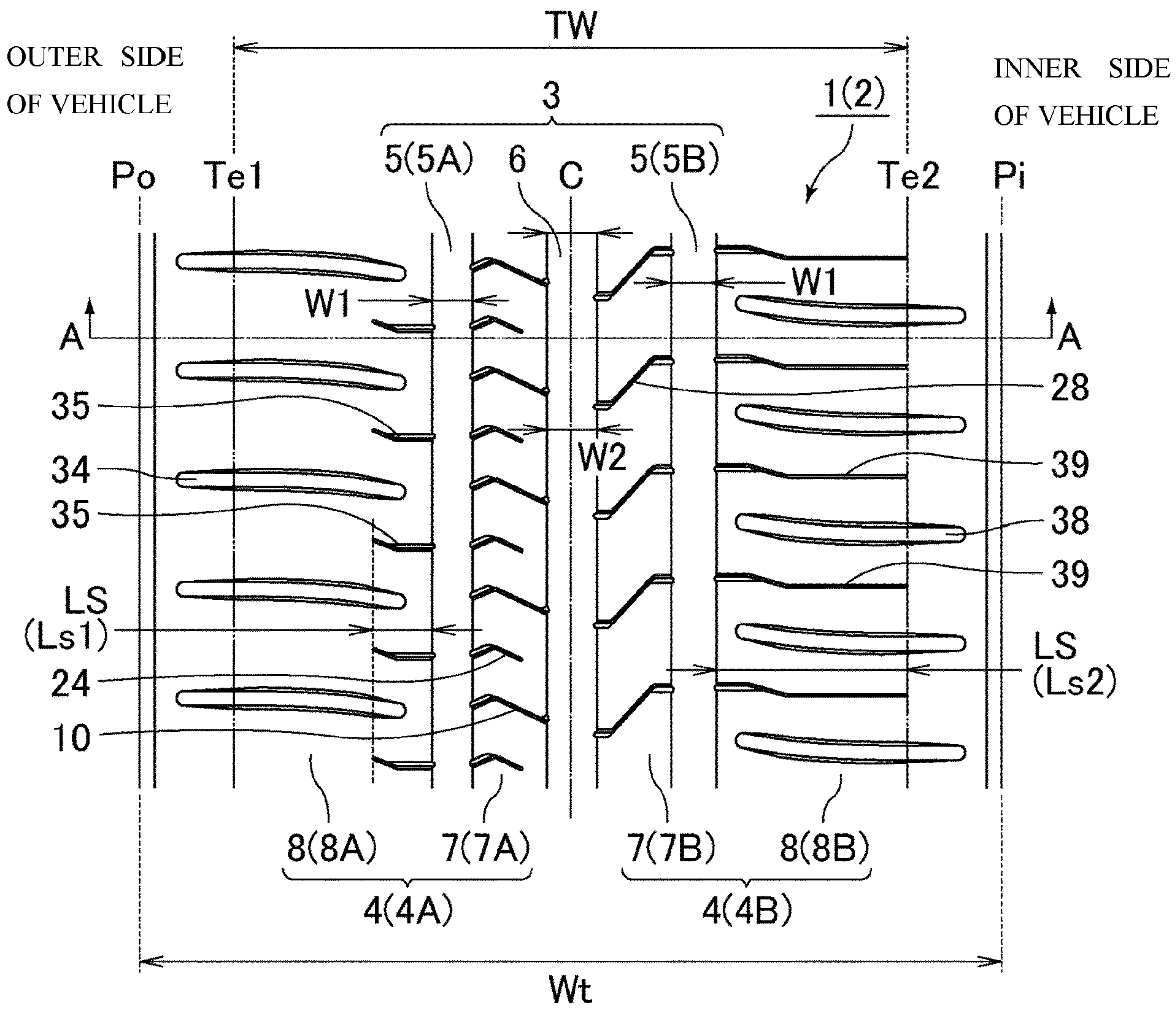
TW
OUTER SIDE OF VEHICLE
INNER SIDE OF VEHICLE
3
1(2)
5(5A)
6
C
5(5B)
Po
Te1
Te2
Pi
W1
W1
A
A
28
35
34
35
W2
39
38
39
LS
(Ls1)
LS
(Ls2)
24
10
8(8A)
7(7A)
7(7B)
8(8B)
4(4A)
4(4B)
Wt

Fig. 2

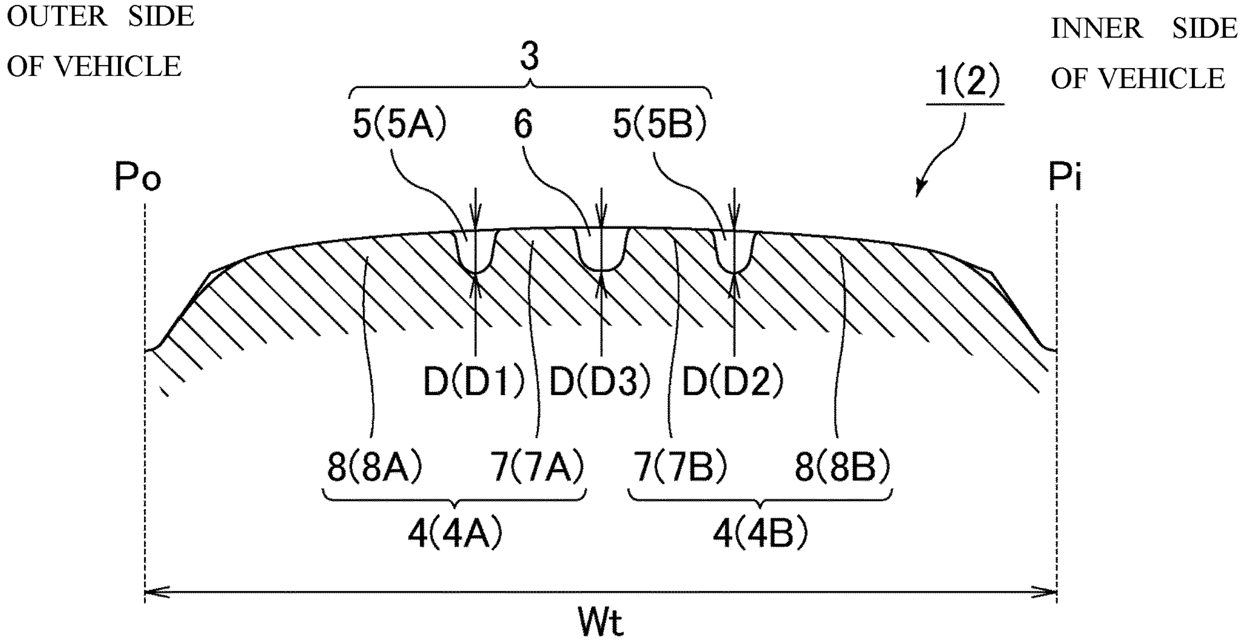
OUTER SIDE
OF VEHICLE
INNER SIDE
OF VEHICLE
3
1(2)
5(5A)
6
5(5B)
Po
Pi
D(D1)
D(D3)
D(D2)
8(8A)
7(7A)
7(7B)
8(8B)
4(4A)
4(4B)
Wt

Fig. 3

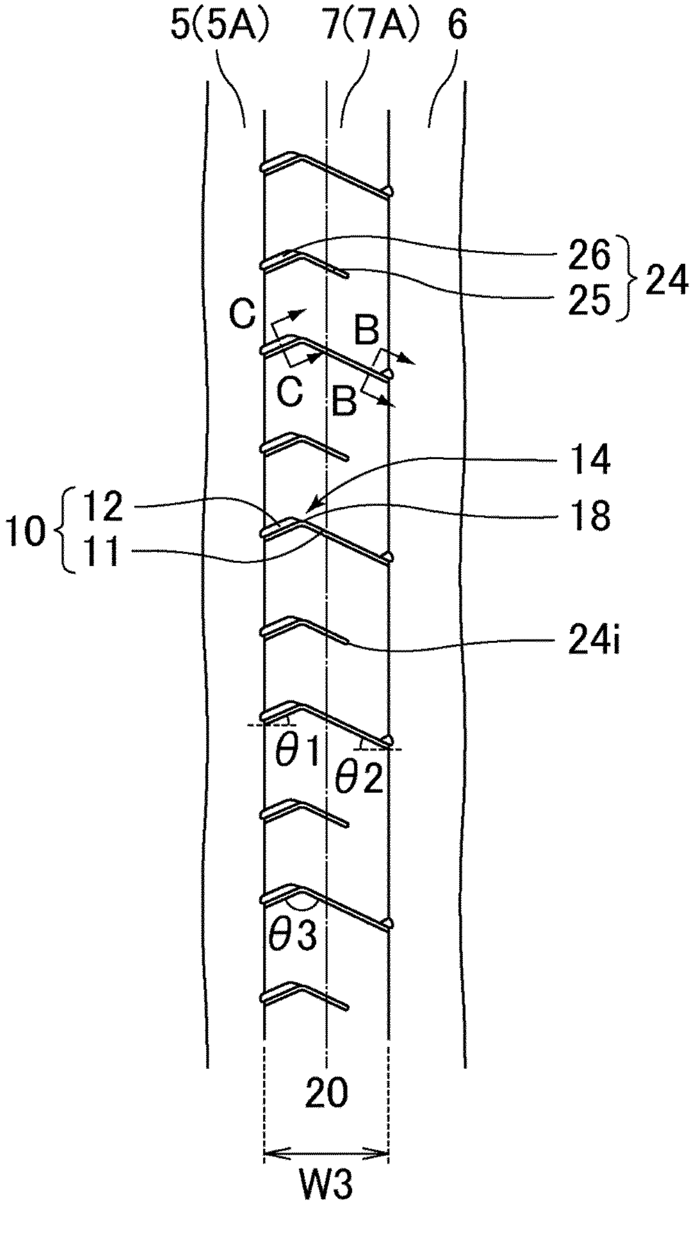

Fig. 4

(a)

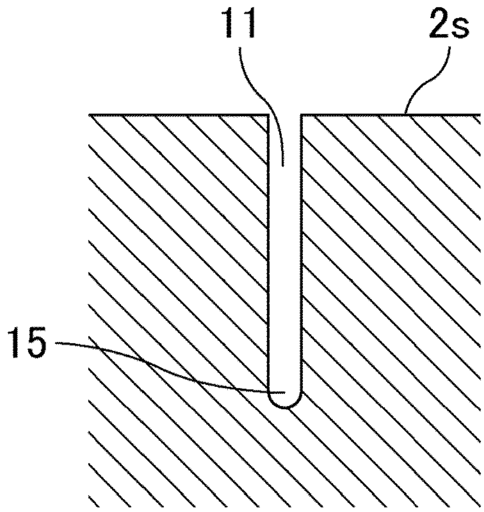


(b)

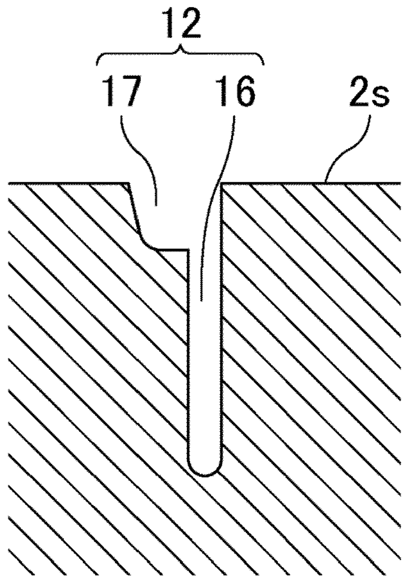

Fig. 5

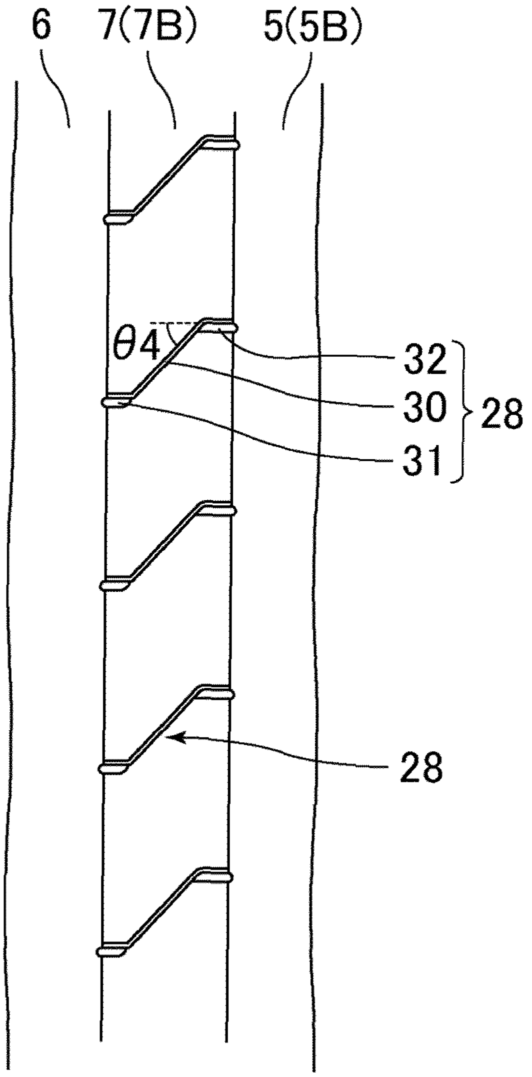

Fig. 6

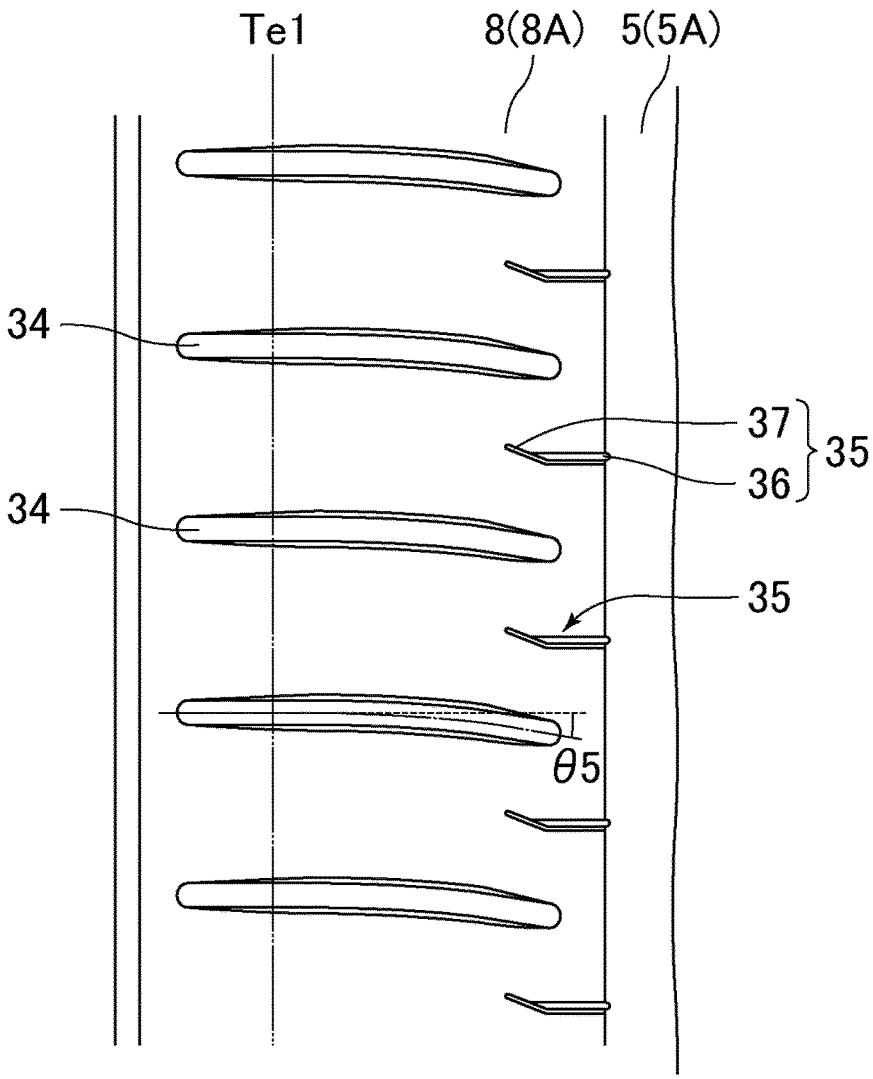

Fig. 7

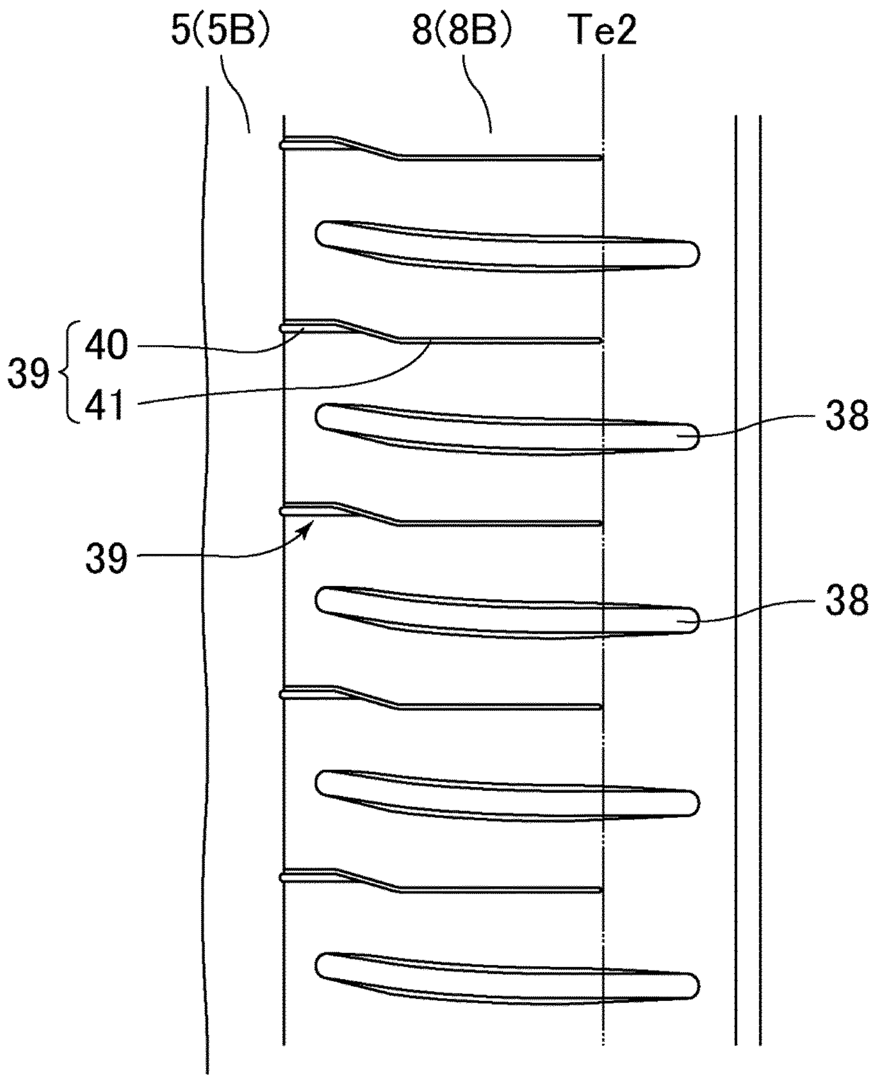

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3254872 A1
- JP 2010111753 A

### Non-patent literature cited in the description

- the 4th series of Experimental Chemistry. vol. 28